(19) Europäisches Patentamt

European Patent Office

Office européen des brevets

(11) **EP 4 752 589 A1**

(12) **EUROPEAN PATENT APPLICATION**
published in accordance with Art. 153(4) EPC

(43) Date of publication:
**03.06.2026 Bulletin 2026/23**

(21) Application number: **24845989.3**

(22) Date of filing: **22.07.2024**

(51) International Patent Classification (IPC):
*G01S 7/02* (2006.01)     *G01S 13/02* (2006.01)

(52) Cooperative Patent Classification (CPC):
**G01S 7/02; G01S 13/02**

(86) International application number:
**PCT/KR2024/010571**

(87) International publication number:
**WO 2025/023687 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.07.2023 KR 20230096867**

(71) Applicant: **LG Electronics Inc.
Yeongdeungpo-gu
Seoul 07336 (KR)**

(72) Inventors:
• **KO, Woosuk
Seoul 06772 (KR)**
• **SEO, Hanbyul
Seoul 06772 (KR)**

(74) Representative: **Maikowski & Ninnemann
Patentanwälte Partnerschaft mbB
Postfach 15 09 20
10671 Berlin (DE)**

(54) **RADAR OPERATION METHOD AND APPARATUS BASED ON FTT SIGNAL PROCESSING**

(57)     An operation method of a first device (100) in a wireless communication system is presented. The method may comprise the steps of: transmitting a first signal to a second device (200); receiving a second signal; acquiring a third signal by performing N*M point FFT on the basis of the second signal; and acquiring the distance between the first device (100) and the second device (200) on the basis of the third signal.

# FIG. 23

```
┌────────────────────────────────────────┐
│ transmitting, to a second device, a first signal │──── S2310
└────────────────────────────────────────┘
                    │
                    ▼
┌────────────────────────────────────────┐
│          receiving a second signal          │──── S2320
└────────────────────────────────────────┘
                    │
                    ▼
┌────────────────────────────────────────┐
│   obtaining a third signal by performing    │──── S2330
│   N*M point FFT based on a second signal    │
└────────────────────────────────────────┘
                    │
                    ▼
┌────────────────────────────────────────┐
│  obtaining a distance between a first device │──── S2340
│ and a second device based on a third signal  │
└────────────────────────────────────────┘
```

EP 4 752 589 A1

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

[Table 1]

| Per device peak data rate | 1 Tbps |
| --- | --- |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method for performing, by a first device, wireless communication may be proposed. For example, the method may comprise: transmitting, to a second device, a first signal; receiving a second signal; obtaining a third signal by performing N*M point fast Fourier transform, FFT, based on the second signal; and obtaining a distance between the first device and the second device based on the third signal.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: transmitting, to a second device, a first signal; receiving a second signal; obtaining a third signal by performing N*M point fast Fourier transform, FFT, based on the second signal; and obtaining a distance between the first device and the second device based on the third signal.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: transmitting, to a second UE, a first signal; receiving a second signal; obtaining a third signal by performing N*M point fast Fourier transform, FFT, based on the second signal; and obtaining a distance between the first UE and the second UE based on the third signal.

According to an embodiment of the present disclosure, a non-transitory computer-readable storage medium storing instructions may be proposed. For example, the instructions, based on being executed, may cause a first device to: transmit, to a second device, a first signal; receive a second signal; obtain a third signal by performing N*M point fast Fourier transform, FFT, based on the second signal; and obtain a distance between the first device and the second device based on the third signal.

According to an embodiment of the present disclosure, a method for performing, by a second device, wireless communication may be proposed. For example, the method may comprise: receiving, from a first device, a first signal; and transmitting, to the first device, a second signal, wherein the second signal may be a reflected signal of the first signal, wherein a third signal may be obtained to the first device by N*M point fast Fourier transform, FFT, being performed based on the second signal, and wherein a distance between the first device and the second device may be obtained based on the third signal.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, a first signal; and transmitting, to the first device, a second signal, wherein the second signal may be a reflected signal of the first signal, wherein a third signal may be obtained to the first device by N*M point fast Fourier transform, FFT, being performed based on the second signal, and wherein a distance between the first device and the second device may be obtained based on the third signal.

## BRIEF DESCRIPTION OF THE DRAWINGS

FIG. 1 shows a communication structure that can be provided in a 6G system, according to one embodiment of the present disclosure.

FIG. 2 shows an electromagnetic spectrum, according to one embodiment of the present disclosure.

FIG. 3 shows an example of an NTN typical scenario based on a transparent payload, according to one embodiment of the present disclosure.

FIG. 4 shows an example of an NTN typical scenario based on a regenerative payload, according to one embodiment of the present disclosure.

FIG. 5 shows an example of a sensing operation, according to one embodiment of the present disclosure.

FIG. 6 shows a structure of a slot of a frame, based on an embodiment of the present disclosure.

FIG. 7 shows an example of a BWP, based on an embodiment of the present disclosure.

FIG. 8 shows a procedure of performing V2X or SL communication by a UE based on a resource allocation mode, based on an embodiment of the present disclosure.

FIG. 9 shows an example of an architecture in a 5G system in which positioning for a UE connected to a Next Generation-Radio Access Network (NG-RAN) or E-UTRAN is possible, according to an embodiment of the present disclosure.

FIG. 10 shows an implementation example of a network for measuring a position of a UE, according to an embodiment of the present disclosure.

FIG. 11 shows an example of a protocol layer used to support LTE Positioning Protocol (LPP) message transmission between an LMF and a UE, according to an embodiment of the present disclosure.

FIG. 12 shows an example of a protocol layer used to support NR Positioning Protocol A (NRPPa) PDU transmission between an LMF and an NG-RAN node, according to an embodiment of the present disclosure.

FIG. 13 shows an Observed Time Difference Of Arrival (OTDOA) positioning method according to an embodiment of the present disclosure.

FIG. 14 shows a double-side RTT, according to one embodiment of the present disclosure.

FIG. 15 shows a radar device according to an embodiment of the present disclosure.

FIG. 16 shows a system that transmits sensing signal blocks at certain time intervals and constructs backscatter from reflected signals, according to an embodiment of the present disclosure.

FIG. 17 shows a signal waveform output through a DAC block of a radar system, according to an embodiment of the present disclosure.

FIG. 18 shows a waveform of periodic M-point FFT output signals of a radar system, according to an embodiment of the present disclosure.

FIG. 19 shows an N-successive chirp signal-based radar system using a periodic chirp signal-based radar system, according to an embodiment of the present disclosure.

FIG. 20 shows a detection signal waveform of an N-successive chirp signal-based radar system, according to an embodiment of the present disclosure.

FIG. 21 shows an N successive M-sample chirp signal-based radar system implemented using an M-point FFT output, according to an embodiment of the present disclosure.

FIG. 22 shows a method for addressing a performance degradation problem compared to a radar system that actually transmits N successive M-sample chirp signals, according to an embodiment of the present disclosure.

FIG. 23 shows a procedure in which a first device performs wireless communication, according to an embodiment of the present disclosure.

FIG. 24 shows a procedure in which a second device performs wireless communication, according to an embodiment of the present disclosure.

FIG. 25 shows a communication system 1, based on an embodiment of the present disclosure.

FIG. 26 shows wireless devices, based on an embodiment of the present disclosure.

FIG. 27 shows a signal process circuit for a transmission signal, based on an embodiment of the present disclosure.

FIG. 28 shows another example of a wireless device, based on an embodiment of the present disclosure.

FIG. 29 shows a hand-held device, based on an embodiment of the present disclosure.

FIG. 30 shows a vehicle or an autonomous vehicle, based on an embodiment of the present disclosure.

## MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

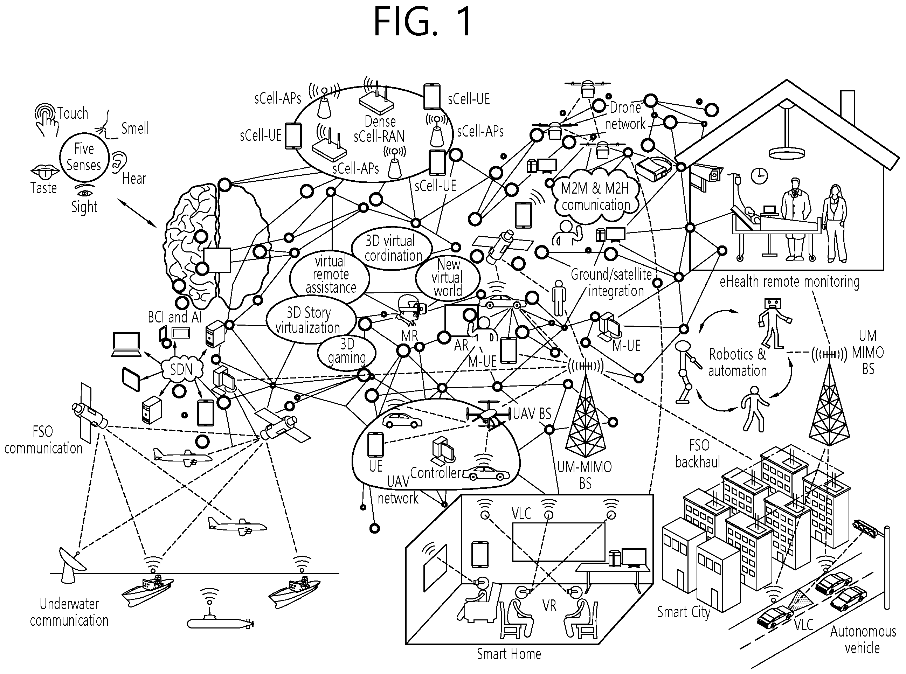

FIG. 1 shows a communication structure that can be provided in a 6G system, according to one embodiment of the present disclosure. The embodiment of FIG. 1 may be combined with various embodiments of the present disclosure.

In 6G, new network features may include the follows.

- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows

- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

The following describes the core implementation technologies for 6G systems.

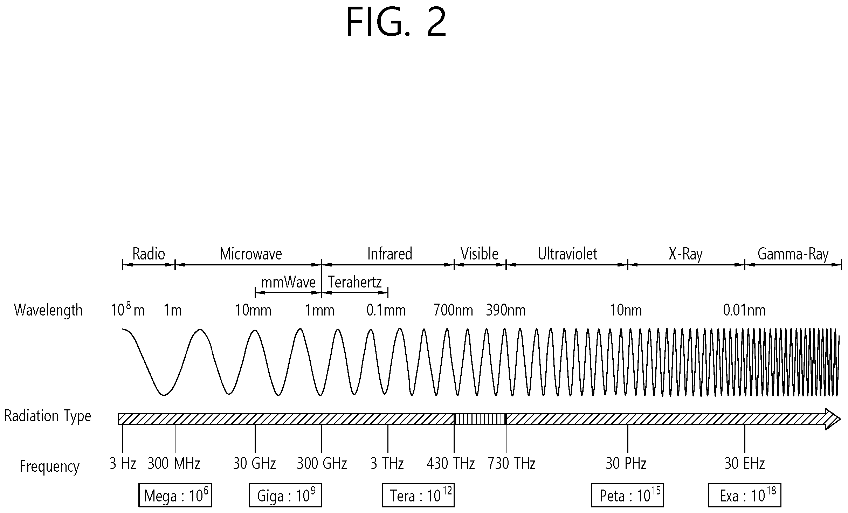

- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface

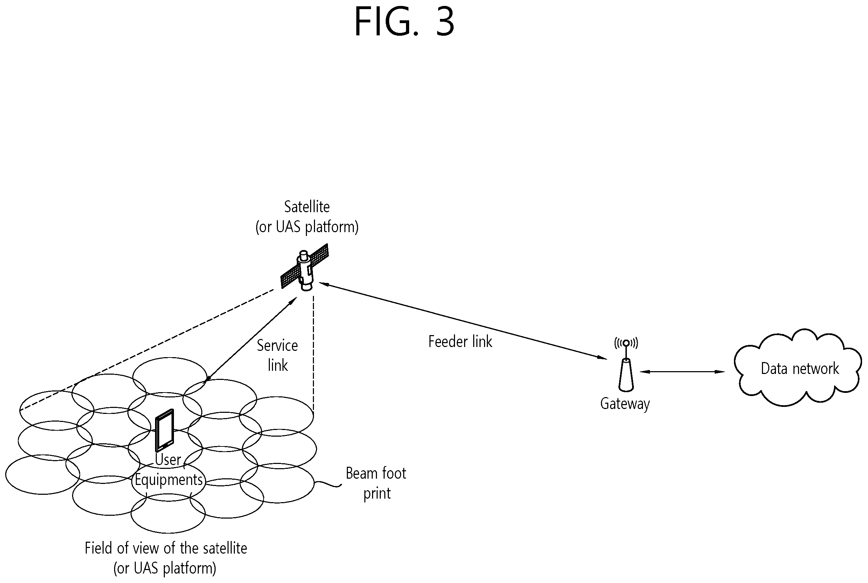

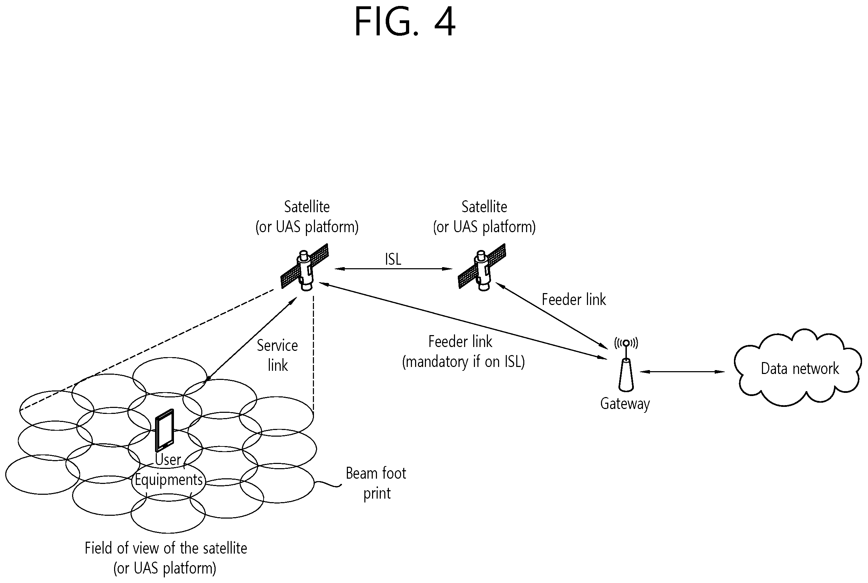

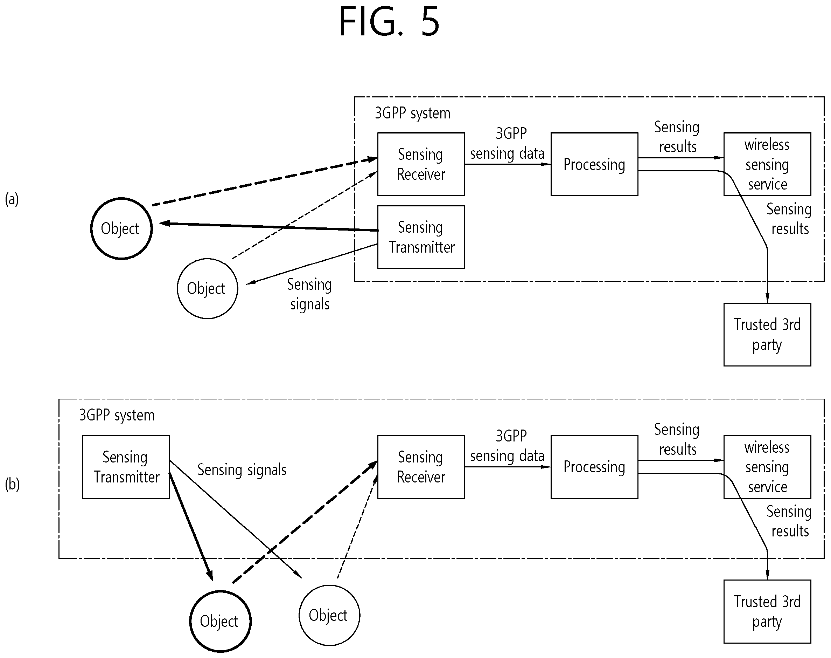

- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, i.e., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot ($N^{slot}_{symb}$), the number of slots per frame ($N^{frame,u}_{slot}$), and the number of slots per subframe ($N^{subframe,u}_{slot}$), according to an SCS configuration (u), when Normal CP or Extended CP is used.

[Table 2]

| CP Type | SCS ($15*2^u$) | $N^{slot}_{symb}$ | $N^{frame,u}_{slot}$ | $N^{subframe,u}_{slot}$ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

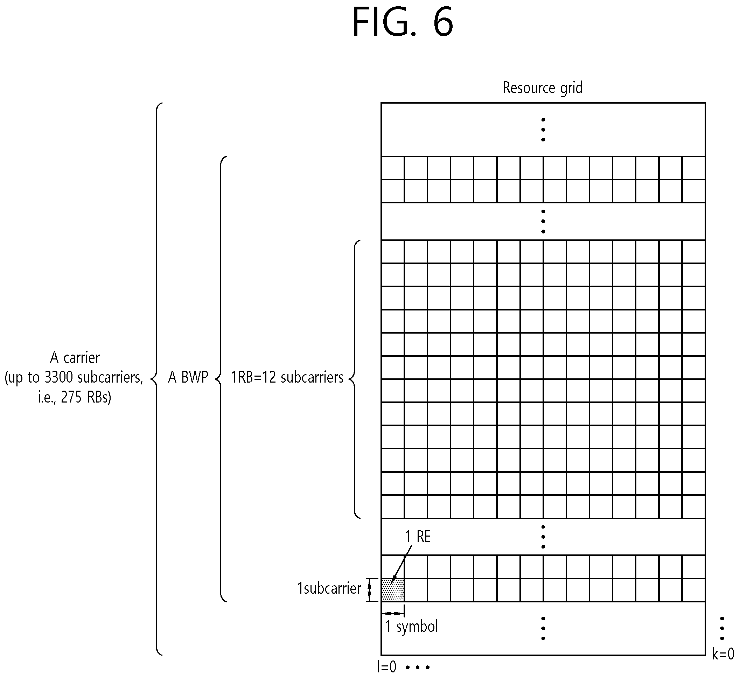

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

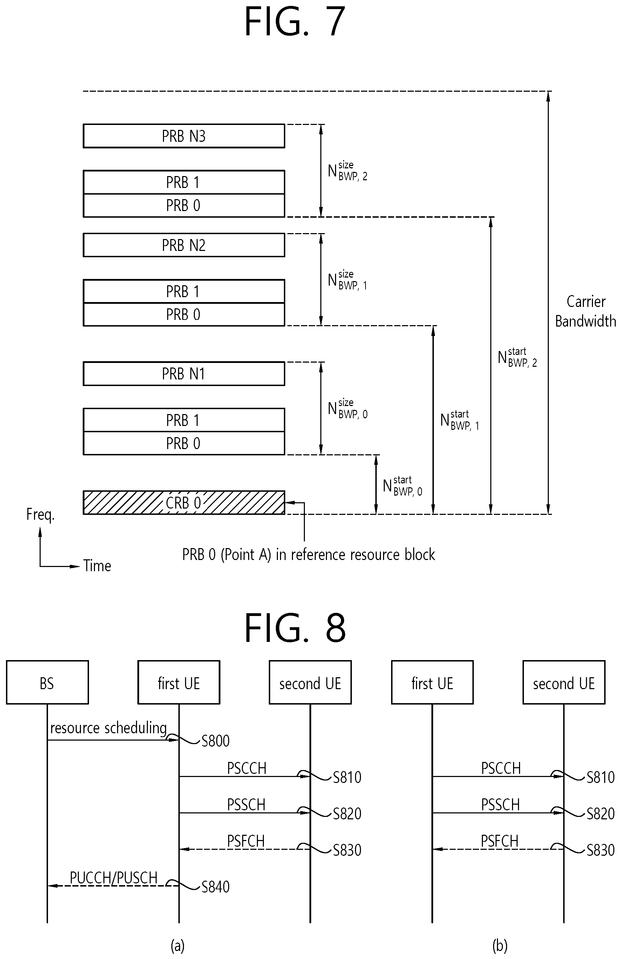

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset $N^{start}_{BWP}$ from the point A, and a bandwidth $N^{size}_{BWP}$. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In this specification, a PSCCH may be replaced by a control channel, a physical control channel, a control channel related to a sidelink, a physical control channel related to a sidelink, etc. In this specification, a PSSCH may be replaced by a shared channel, a physical shared channel, a shared channel related to a sidelink, a physical shared channel related to a sidelink, etc.

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1st-stage SCI) to a second UE based on the resource scheduling. In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1st-stage SCI) to a second UE by using the resource(s). In step S820, the first UE may transmit a PSSCH (e.g., 2nd-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1st SCI, a first SCI, a 1st-stage SCI or a 1st-stage SCI format, and a SCI transmitted through a PSSCH may be referred to as a 2nd SCI, a second SCI, a 2nd-stage SCI or a 2nd-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

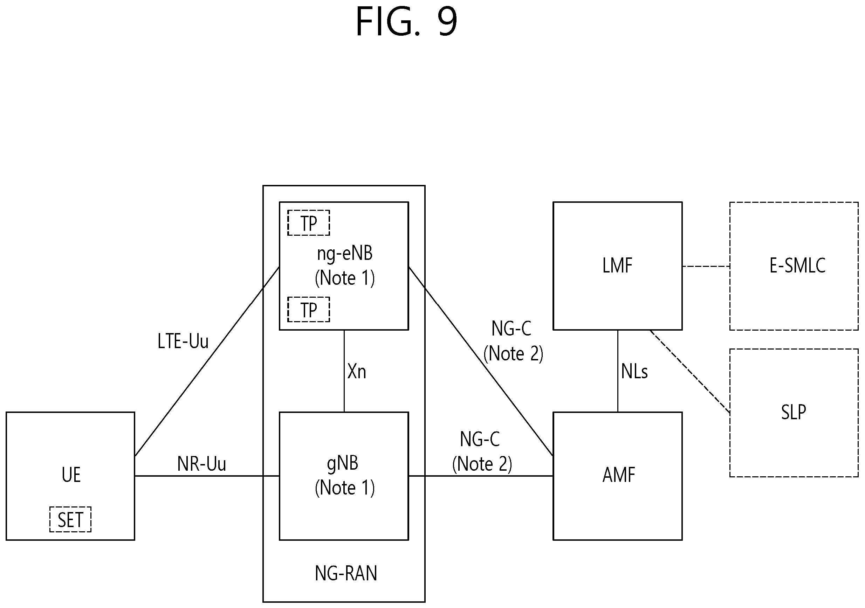

FIG. 9 shows an example of an architecture in a 5G system in which positioning for a UE connected to a Next Generation-Radio Access Network (NG-RAN) or E-UTRAN is possible, according to an embodiment of the present disclosure. The embodiment of FIG. 9 may be combined with various embodiments of the present disclosure.

Referring to FIG. 9, an AMF may receive a request for a location service related to a specific target UE from a different entity such as a gateway mobile location center (GMLC), or may determine to start the location service in the AMF itself instead of the specific target UE. Then, the AMF may transmit a location service request to a location management function (LMF). Upon receiving the location service request, the LMF may process the location service request and return a processing request including an estimated position or the like of the UE to the AMF. Meanwhile, if the location service request is received from the different entity such as GMLC other than the AMF, the AMF may transfer to the different entity the processing request received from the LMF.

A new generation evolved-NB (ng-eNB) and a gNB are network elements of NG-RAN capable of providing a measurement result for position estimation, and may measure a radio signal for a target UE and may transfer a resultant value to the LMF. In addition, the ng-eNB may control several transmission points (TPs) such as remote radio heads or PRS-dedicated TPs supporting a positioning reference signal (PRS)-based beacon system for E-UTRA.

The LMF may be connected to an enhanced serving mobile location centrer (E-SMLC), and the E-SMLC may allow the LMF to access E-UTRAN. For example, the E-SMLC may allow the LMF to support observed time difference of arrival (OTDOA), which is one of positioning methods of E-UTRAN, by using downlink measurement obtained by a target UE through a signal transmitted from the gNB and/or the PRS-dedicated TPs in the E-UTRAN.

Meanwhile, the LMF may be connected to an SUPL location platform (SLP). The LMF may support and manage different location determining services for respective target UEs. The LMF may interact with a serving ng-eNB or serving gNB for the target UE to obtain location measurement of the UE. For positioning of the target UE, the LMF may determine a positioning method based on a location service (LCS) client type, a requested quality of service (QoS), UE positioning capabilities, gNB positioning capabilities, and ng-eNB positioning capabilities, or the like, and may apply such a positioning method to the serving gNB and/or the serving ng-eNB. In addition, the LMF may determine additional information such as a position estimation value for the target UE and accuracy of position estimation and speed. The SLP is a secure user plane location (SUPL) entity in charge of positioning through a user plane.

The UE may measure a downlink signal through NG-RAN, E-UTRAN, and/or other sources such as different global navigation satellite system (GNSS) and terrestrial beacon system (TBS), wireless local access network (WLAN) access points, Bluetooth beacons, UE barometric pressure sensors or the like. The UE may include an LCS application. The UE may communicate with a network to which the UE has access, or may access the LCS application through another application included in the UE. The LCS application may include a measurement and calculation function required to determine a position of the UE. For example, the UE may include an independent positioning function such as a global positioning system (GPS), and may report the position of the UE independent of NG-RAN transmission. Positioning information obtained independently as such may be utilized as assistance information of the positioning information obtained from the network.

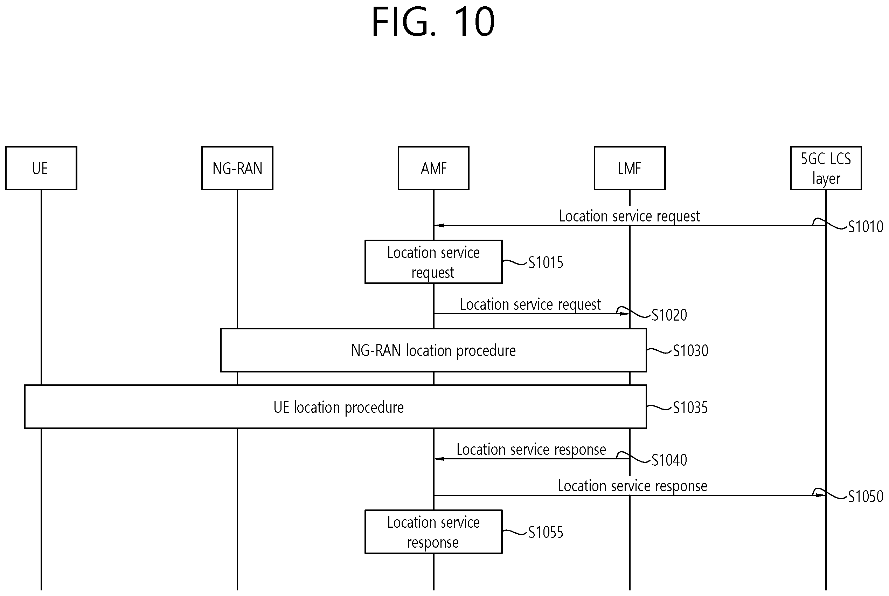

FIG. 10 shows an implementation example of a network for measuring a position of a UE, according to an embodiment of the present disclosure. The embodiment of FIG. 10 may be combined with various embodiments of the present disclosure.

When the UE is in a connection management (CM)-IDLE state, if an AMF receives a location service request, the AMF may establish a signaling connection with the UE, and may request for a network trigger service to allocate a specific serving gNB or ng-eNB. Such an operational process is omitted in FIG. 10. That is, it may be assumed in FIG. 10 that the UE is in a connected mode. However, due to signaling and data inactivation or the like, the signaling connection may be released by NG-RAN while a positioning process is performed.

A network operation process for measuring a position of a UE will be described in detail with reference to FIG. 10. In step S1010, a 5GC entity such as GMLC may request a serving AMF to provide a location service for measuring a position of a target UE. However, even if the GMLC does not request for the location service, based on step S1015, the serving AMF may determine that the location service for measuring the position of the target UE is required. For example, to measure the position of the UE for an emergency call, the serving AMF may determine to directly perform the location service.

Thereafter, the AMF may transmit the location service request to an LMF based on step S1020, and the LMF may start location procedures to obtain position measurement data or position measurement assistance data together with a serving ng-eNB and a serving gNB, according to step S1030. Additionally, based on step S1035, the LMF may start location procedures for downlink positioning together with the UE. For example, the LMF may transmit assistance data defined in 3GPP TS 36.355, or may obtain a position estimation value or a position measurement value. Meanwhile, step S1035 may be performed additionally after step S1030 is performed, or may be performed instead of step S1030.

In step S1040, the LMF may provide a location service response to the AMF. In addition, the location service response may include information on whether position estimation of the UE is successful and a position estimation value of the UE. Thereafter, if the procedure of FIG. 10 is initiated by step S1010, in step S1050, the AMF may transfer the location service response to a 5GC entity such as GMLC, and if the procedure of FIG. 10 is initiated by step S1015, in step S1055, the AMF may use the location service response to provide a location service related to an emergency call or the like.

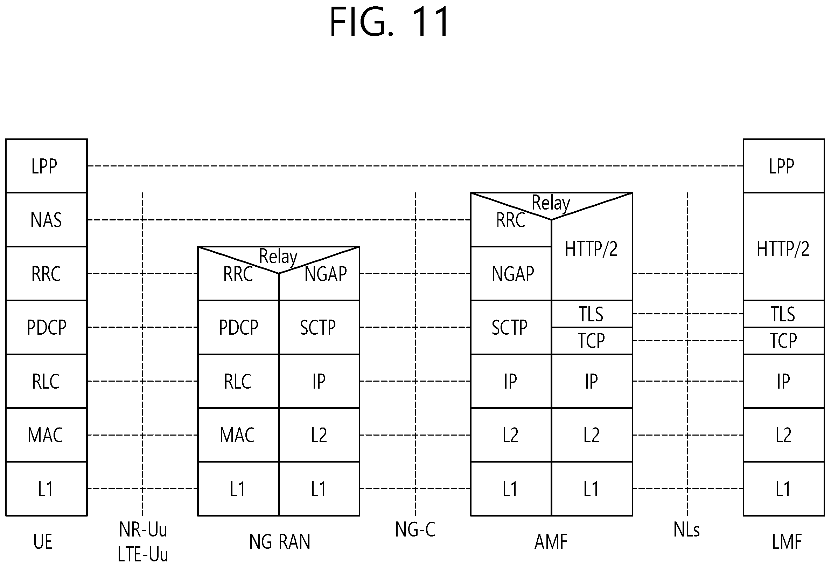

FIG. 11 shows an example of a protocol layer used to support LTE Positioning Protocol (LPP) message transmission between an LMF and a UE, according to an embodiment of the present disclosure. The embodiment of FIG. 11 may be combined with various embodiments of the present disclosure.

An LPP PDU may be transmitted through a NAS PDU between an AMF and the UE. Referring to FIG. 11, an LPP may be terminated between a target device (e.g., a UE in a control plane or an SUPL enabled terminal (SET) in a user plane) and a location server (e.g., an LMF in the control plane and an SLP in the user plane). The LPP message may be transferred in a form of a transparent PDU through an intermediary network interface by using a proper protocol such as an NG application protocol (NGAP) through an NG-control plane (NG-C) interface and NAS/RRC or the like through an NR-Uu interface. The LPP protocol may enable positioning for NR and LTE by using various positioning methods.

For example, based on the LPP protocol, the target device and the location server may exchange mutual capability information, assistance data for positioning, and/or location information. In addition, an LPP message may be used to indicate exchange of error information and/or interruption of the LPP procedure.

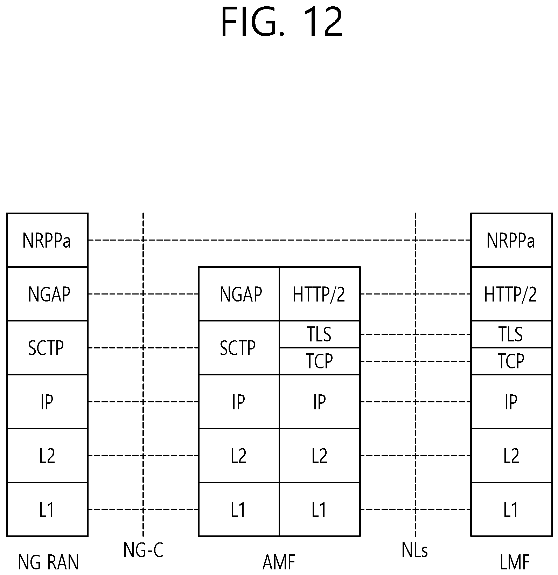

FIG. 12 shows an example of a protocol layer used to support NR Positioning Protocol A (NRPPa) PDU transmission between an LMF and an NG-RAN node, according to an embodiment of the present disclosure. The embodiment of FIG. 12 may be combined with various embodiments of the present disclosure.

Referring to FIG. 12, the NRPPa may be used for information exchange between the NG-RAN node and the LMF. Specifically, the NRPPa may exchange an enhanced-cell ID (E-CID) for measurement, data for supporting an OTDOA positioning method, and a cell-ID, cell location ID, or the like for an NR cell ID positioning method, transmitted from the ng-eNB to the LMF. Even if there is no information on an associated NRPPa transaction, the AMF may route NRPPa PDUs based on a routing ID of an associated LMR through an NG-C interface.

A procedure of an NRPPa protocol for location and data collection may be classified into two types. A first type is a UE associated procedure for transferring information on a specific UE (e.g., position measurement information or the like), and a second type is a non UE associated procedure for transferring information (e.g., , gNB/ng-eNB/TP timing information, etc.) applicable to an NG-RAN node and associated TPs. The two types of the procedure may be independently supported or may be simultaneously supported.

Meanwhile, examples of positioning methods supported in NG-RAN may include GNSS, OTDOA, enhanced cell ID (E-CID), barometric pressure sensor positioning, WLAN positioning, Bluetooth positioning and terrestrial beacon system (TBS), uplink time difference of arrival (UTDOA), etc.

(1) OTDOA (Observed Time Difference Of Arrival)

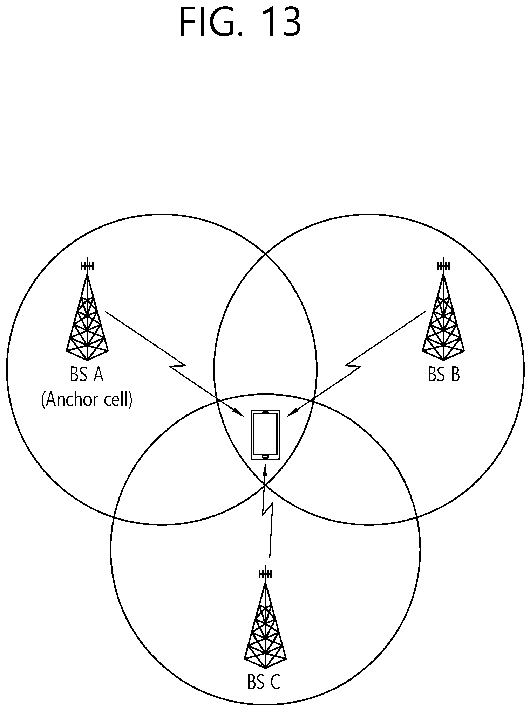

FIG. 13 shows an Observed Time Difference Of Arrival (OTDOA) positioning method according to an embodiment of the present disclosure. The embodiment of FIG. 13 may be combined with various embodiments of the present disclosure.

Referring to FIG. 13, the OTDOA positioning method uses measurement timing of downlink signals received by a UE from an eNB, an ng-eNB, and a plurality of TPs including a PRS-dedicated TP. The UE measures timing of downlink signals received by using location assistance data received from a location server. In addition, a position of the UE may be determined based on such a measurement result and geometric coordinates of neighboring TPs.

A UE connected to a gNB may request for a measurement gap for OTDOA measurement from the TP. If the UE cannot recognize a single frequency network (SFN) for at least one TP in the OTDOA assistance data, the UE may use an autonomous gap to obtain an SNF of an OTDOA reference cell before the measurement gap is requested to perform reference signal time difference (RSTD) measurement.

Herein, the RSTD may be defined based on a smallest relative time difference between boundaries of two subframes received respectively from a reference cell and a measurement cell. That is, the RSTD may be calculated based on a relative time difference between a start time of a subframe received from the measurement cell and a start time of a subframe of a reference cell closest to the start time of the subframe received from the measurement cell. Meanwhile, the reference cell may be selected by the UE.

For correct OTDOA measurement, it may be necessary to measure a time of arrival (TOA) of a signal received from three or more TPs or BSs geometrically distributed. For example, a TOA may be measured for each of a TP1, a TP2, and a TP3, and RSTD for TP 1-TP 2, RSTD for TP 2-TP 3, and RSTD for TP 3-TP 1 may be calculated for the three TOAs. Based on this, a geometric hyperbola may be determined, and a point at which these hyperbolas intersect may be estimated as a position of a UE. In this case, since accuracy and/or uncertainty for each TOA measurement may be present, the estimated position of the UE may be known as a specific range based on measurement uncertainty.

For example, RSTD for two TPs may be calculated based on Equation 1.

[Equation 1]

$$RSTDi, 1 = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

Herein, c may be the speed of light, $\{x_t, y_t\}$ may be a (unknown) coordinate of a target UE, $\{x_i, y_i\}$ may be a coordinate of a (known) TP, and $\{x_1, y_1\}$ may be a coordinate of a reference TP (or another TP). Herein, $(T_i-T_1)$ may be referred to as "real time differences (RTDs)" as a transmission time offset between two TPs, and $n_i$, $n_1$ may represent values related to UE TOA measurement errors.

(2) E-CID (Enhanced Cell ID)

In a cell ID (CID) positioning method, a position of a UE may be measured through geometric information of a serving ng-eNB, serving gNB, and/or serving cell of the UE. For example, the geometric information of the serving ng-eNB, serving gNB, and/or serving cell may be obtained through paging, registration, or the like.

Meanwhile, in addition to the CID positioning method, an E-CID positioning method may use additional UE measurement and/or NG-RAN radio resources or the like to improve a UE position estimation value. In the E-CID positioning method, although some of the measurement methods which are the same as those used in a measurement control system of an RRC protocol may be used, additional measurement is not performed in general only for position measurement of the UE. In other words, a measurement configuration or a measurement control message may not be provided additionally to measure the position of the UE. Also, the UE may not expect that an additional measurement operation only for position measurement will be requested, and may report a measurement value obtained through measurement methods in which the UE can perform measurement in a general manner.

For example, the serving gNB may use an E-UTRA measurement value provided from the UE to implement the E-CID positioning method.

Examples of a measurement element that can be used for E-CID positioning may be as follows.

- UE measurement: E-UTRA reference signal received power (RSRP), E-UTRA reference signal received quality (RSRQ), UE E-UTRA Rx-Tx Time difference, GSM EDGE random access network (GERAN)/WLAN reference signal strength indication (RSSI), UTRAN common pilot channel (CPICH) received signal code power (RSCP), UTRAN CPICH Ec/Io
- E-UTRAN measurement: ng-eNB Rx-Tx Time difference, timing advance (TADV), angle of arrival (AoA)

Herein, the TADV may be classified into Type 1 and Type 2 as follows.

TADV Type 1 = (ng-eNB Rx-Tx time difference)+(UE E-UTRA Rx-Tx time difference)

TADV Type 2 = ng-eNB Rx-Tx time difference

Meanwhile, AoA may be used to measure a direction of the UE. The AoA may be defined as an estimation angle with respect to the position of the UE counterclockwise from a BS/TP. In this case, a geographic reference direction may be north. The BS/TP may use an uplink signal such as a sounding reference signal (SRS) and/or a demodulation reference signal (DMRS) for AoA measurement. In addition, the larger the arrangement of the antenna array, the higher the measurement accuracy of the AoA. When the antenna arrays are arranged with the same interval, signals received from adjacent antenna elements may have a constant phase-rotate.

(3) UTDOA (Uplink Time Difference of Arrival)

UTDOA is a method of determining a position of a UE by estimating an arrival time of SRS. When calculating an estimated SRS arrival time, the position of the UE may be estimated through an arrival time difference with respect to another cell (or BS/TP) by using a serving cell as a reference cell. In order to implement the UTDOA, E-SMLC may indicate a serving cell of a target UE to indicate SRS transmission to the target UE. In addition, the E-SMLC may provide a configuration such as whether the SRS is periodical/aperiodical, a bandwidth, frequency/group/sequence hopping, or the like.

(4) RTT (Round Trip Time)

RTT is a positioning technology that may measure the distance between two entities even if the target entity and the server entity are out of time synchronization. If RTT is performed with multiple server entities, the distances from each server entity may be measured separately. And, by drawing a circle using the measured distances from each server entity, absolute positioning for the target entity may be performed by the point where each circle intersects. For example, it may be referred to as multi-RTT.

The RTT between two entities can be performed as follows. Entity #1 may transmit PRS #1 at t1, and Entity #2 may receive the RRS #1 at t2. After the PRS #1 is received by the Entity #2, Entity #2 may transmit PRS #2 at t3, and Entity #1 may receive the PRS #2 at t4. In this case, the distance D between the two entities can be derived as follows.

[Equation 2]

$$D = c \times \{ (t4 - t1) - (t3 - t2) \} / 2 \; (Here, C \; is \; the \; speed \; of \; light)$$

For RTT between UE and gNB, the distance between UE and gNB can be derived based on Equation 2 above using the UE Rx - Tx time difference and gNB Rx - Tx time difference in the table below.

(5) double-side RTT

Double-side RTT is a positioning technology that can measure the distance between two entities even when there is a sampling clock frequency offset between the target and server entities.

The method for performing a double-sided RTT between two entities is as follows,

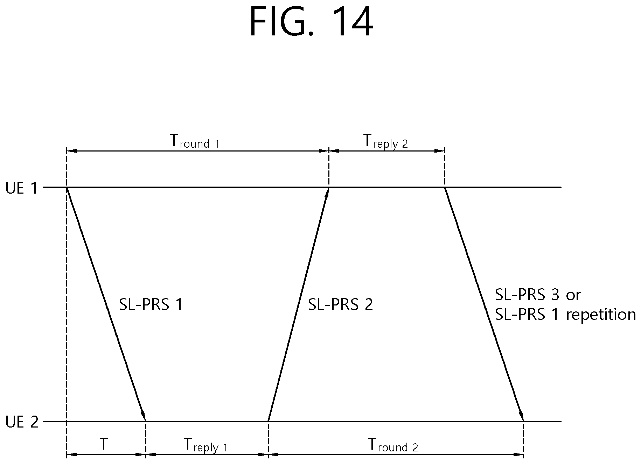

FIG. 14 shows a double-side RTT, according to one embodiment of the present disclosure. The embodiment of FIG. 14 may be combined with various embodiments of the present disclosure.

Double-side RTT is widely used in ultra-wideband (UWB) positioning and may reduce the impact of clock errors. Referring to FIG. 14, the propagation delay T may be estimated from two measurement values (i.e., $T_{round1}$, $T_{round2}$, $T_{reply1}$, $T_{reply2}$). For example, the propagation delay T may be estimated based on Equation 3.

[Equation 3]

$$\hat{T} = \frac{1}{2} \left( T_{round1} - T_{reply1} \right)$$

$$\hat{T} = \frac{1}{2} \left( T_{round2} - T_{reply2} \right)$$

And, $T_{round1}*T_{round2}-T_{reply1}*T_{reply2}$ may be obtained based on Equation 4.

[Equation 4]

$$T_{round1} \times T_{round2} - T_{reply1} \times T_{reply2}$$

$$= 4\hat{T}^2 + 2\hat{T} \left( T_{reply1} + T_{reply2} \right) = \hat{T} \left( T_{round1} + T_{round2} + T_{reply1} + T_{reply2} \right)$$

Where

$$T_{round1} \times T_{round2} = \left( 2\hat{T} + T_{reply1} \right) \left( 2\hat{T} + T_{reply2} \right)$$

$$= 4\hat{T}^2 + 2\hat{T} \left( T_{reply1} + T_{reply2} \right) + T_{reply1} \times T_{reply2}$$

Accordingly, the propagation delay T may be estimated as Equation 5.

[Equation 5]

$$\hat{T} = \frac{T_{round1} \times T_{round2} - T_{reply1} \times T_{reply2}}{(T_{round1} + T_{round2} + T_{reply1} + T_{reply2})}$$

In this case, the propagation delay estimation error due to clock error can be obtained based on Equation 6.

[Equation 6]

$$error = \hat{T} - T \approx \frac{(e_{UE1} + e_{UE2})}{2}\hat{T}$$

where

$e_{UE1}$ and $e_{UE2}$ is the clock offset of UE1 and UE 2;
$\hat{T}$ is estimated propagation delay between UE 1 and UE 2.

Table 3 shows an example of reference signal time difference (RSTD). The RSTD in Table 3 may be applied for SL positioning.

[Table 3]

| Definition | The relative timing difference between the E-UTRA neighbour cell j and the E-UTRA reference cell i, defined as $T_{SubframeRxj}$ - $T_{SubframeRxi}$, where: $T_{SubframeRxj}$ is the time when the UE receives the start of one subframe from E-UTRA cell j $T_{SubframeRxi}$ is the time when the UE receives the corresponding start of one subframe from E-UTRA cell i that is closest in time to the subframe received from E-UTRA cell j. The reference point for the observed subframe time difference shall be the antenna connector of the UE. |
|---|---|
| Applicable for | RRC_CONNECTED inter-RAT |

Table 4 shows an example of downlink PRS reference signal received power (DL PRS RSRP). The DL PRS RSRP in Table 4 may be applied for SL positioning.

[Table 4]

| Definition | DL PRS reference signal received power (DL PRS-RSRP), is defined as the linear average over the power contributions (in [W]) of the resource elements that carry DL PRS reference signals configured for RSRP measurements within the considered measurement frequency bandwidth. For frequency range 1, the reference point for the DL PRS-RSRP shall be the antenna connector of the UE. For frequency range 2, DL PRS-RSRP shall be measured based on the combined signal from antenna elements corresponding to a given receiver branch. For frequency range 1 and 2, if receiver diversity is in use by the UE, the reported DL PRS-RSRP value shall not be lower than the corresponding DL PRS-RSRP of any of the individual receiver branches. |
|---|---|
| Applicable for | RRC_CONNECTED intra-frequency, RRC_CONNECTED inter-frequency |

Table 5 shows an example of downlink reference signal time difference (DL RSTD). The DL RSTD in Table 5 may be applied for SL positioning.

[Table 5]

| Definition | DL reference signal time difference (DL RSTD) the positioning node *j* and the reference positioning node *i*, is defined as $T_{SubframeRxj}$ - $T_{SubframeRxi}$, Where: $T_{SubframeRxj}$ is the time when the UE receives the start of one subframe from positioning node *j*. $T_{SubframeRxi}$ is the time when the UE receives the corresponding start of one subframe from positioning node *i* that is closest in time to the subframe received from positioning node *j*. Multiple DL PRS resources can be used to determine the start of one subframe from a positioning node. For frequency range 1, the reference point for the DL RSTD shall be the antenna connector of the UE. For frequency range 2, the reference point for the DL RSTD shall be the antenna of the UE. |
|---|---|

(continued)

| Applicable for | RRC_CONNECTED intra-frequency, RRC_CONNECTED inter-frequency |
|---|---|

Table 6 shows an example of UE Rx-Tx time difference. The UE Rx-Tx time difference in Table 6 may be applied for SL positioning.

[Table 6]

| Definition | The UE Rx - Tx time difference is defined as $T_{UE-RX} - T_{UE-TX}$<br>Where:<br>$T_{UE-RX}$ is the UE received timing of downlink subframe #i from a positioning node, defined by the first detected path in time.<br>$T_{UE-TX}$ is the UE transmit timing of uplink subframe #j that is closest in time to the subframe #i received from the positioning node.<br>Multiple DL PRS resources can be used to determine the start of one subframe of the first arrival path of the positioning node.<br>For frequency range 1, the reference point for $T_{UE-RX}$ measurement shall be the Rx antenna connector of the UE and the reference point for $T_{UE-TX}$ measurement shall be the Tx antenna connector of the UE. For frequency range 2, the reference point for $T_{UE-RX}$ measurement shall be the Rx antenna of the UE and the reference point for $T_{UE-TX}$ measurement shall be the Tx antenna of the UE. |
|---|---|
| Applicable for | RRC_CONNECTED intra-frequency, RRC_CONNECTED inter-frequency |

Table 7 shows an example of uplink relative time of arrival (UL RTOA) ($T_{UL-RTOA}$). The UL RTOA in Table 7 may be applied for SL positioning.

[Table 7]

| Definition | [The UL Relative Time of Arrival ($T_{UL-RTOA}$) is the beginning of subframe $i$ containing SRS received in positioning node $j$, relative to the configurable reference time.]<br>Multiple SRS resources for positioning can be used to determine the beginning of one subframe containing SRS received a positioning node.<br>The reference point for $T_{UL-RTOA}$ shall be:<br>　- for type 1-C base station: the Rx antenna connector,<br>　- for type 1-O or 2-O base station: the Rx antenna,<br>　- for type 1-H base station: the Rx Transceiver Array Boundary connector. |
|---|---|

Table 8 shows an example of gNB Rx-Tx time difference. The gNB Rx-Tx time difference in Table 8 may be applied for SL positioning.

[Table 8]

| Definition | The gNB Rx - Tx time difference is defined as $T_{gNB-RX} - T_{gNB-TX}$<br>Where:<br>$T_{gNB-RX}$ is the positioning node received timing of uplink subframe #i containing SRS associated with UE, defined by the first detected path in time.<br>$T_{gNB-TX}$ is the positioning node transmit timing of downlink subframe #j that is closest in time to the subframe #i received from the UE.<br>Multiple SRS resources for positioning can be used to determine the start of one subframe containing SRS. The reference point for $T_{gNB-RX}$ shall be:<br>　- for type 1-C base station: the Rx antenna connector,<br>　- for type 1-O or 2-O base station: the Rx antenna,<br>　- for type 1-H base station: the Rx Transceiver Array Boundary connector. |
|---|---|

(continued)

| | The reference point for $T_{gNB-TX}$ shall be: <br> - for type 1-C base station: the Tx antenna connector, <br> - for type 1-O or 2-O base station: the Tx antenna, <br> - for type 1-H base station: the Tx Transceiver Array Boundary connector. |
| --- | --- |

Table 9 shows an example of UL angle of arrival (UL AoA). The UL AoA in Table 9 may be applied for SL positioning.

[Table 9]

| Definition | UL Angle of Arrival (UL AoA) is defined as the estimated azimuth angle and vertical angle of a UE with respect to a reference direction, wherein the reference direction is defined: <br> - In the global coordinate system (GCS), wherein estimated azimuth angle is measured relative to geographical North and is positive in a counter-clockwise direction and estimated vertical angle is measured relative to zenith and positive to horizontal direction <br> - In the local coordinate system (LCS), wherein estimated azimuth angle is measured relative to x-axis of LCS and positive in a counter-clockwise direction and estimated vertical angle is measured relative to z-axis of LCS and positive to x-y plane direction. <br> The UL-AoA is determined at the gNB antenna for an UL channel corresponding to this UE. |
| --- | --- |

Table 10 shows an example of UL SRS reference signal received power (UL SRS RSRP). The UL SRS RSRP in Table 10 may be applied for SL positioning.

[Table 10]

| Definition | UL SRS reference signal received power (UL SRS-RSRP) is defined as linear average of the power contributions (in [W]) of the resource elements carrying sounding reference signals (SRS). UL SRS-RSRP shall be measured over the configured resource elements within the considered measurement frequency bandwidth in the configured measurement time occasions. <br> For frequency range 1 and 2, UL SRS-RSRP shall be measured based on the combined signal from antenna elements corresponding to a given receiver branch. For frequency range 1 and 2, if receiver diversity is in use by the gNB, the reported UL SRS-RSRP value shall not be lower than the corresponding UL SRS-RSRP of any of the individual receiver branches. |
| --- | --- |

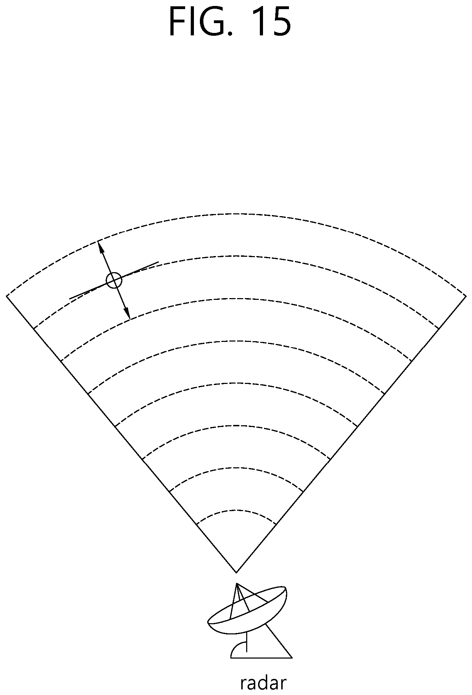

FIG. 15 shows a radar device according to an embodiment of the present disclosure. The embodiment of FIG. 15 may be combined with various embodiments of the present disclosure.

Referring to FIG. 15, a radar is shown. Here, the radar may transmit a signal (e.g., a chirp signal, a positioning reference signal, etc.) to a target to be detected, and may obtain information related to a position of the target, a Doppler velocity, and the like by processing a signal reflected by the target.

For example, the radar of FIG. 15 may be configured with multiple channels, through which the radar may obtain information for an angular component of a signal, and the radar may calculate a position of a target based on a distance to the target and the angular component, and may represent the position as coordinates in a radar coordinate system. For example, the radar may obtain a Doppler velocity.

Meanwhile, a conventional backscatter-based radar system may periodically transmit sensing signal blocks at certain time intervals and perform an operation of detecting backscatter based on signals reflected by backscatter. However, when a large amount of clutter exists around backscatter to be detected, signals reflected by the clutter cause significant interference to signals reflected by the backscatter, resulting in a problem in which detection performance is degraded.

To address such a problem, the sensing signal blocks may be successively transmitted in units of N, and backscatter may modulate an incident sensing signal by a predetermined frequency offset and reflect the modulated sensing signal, such that a signal reflected by the backscatter is received at a frequency different from that of an interference signal reflected by the clutter, thereby resolving the interference problem.

In the present disclosure, a method of improving backscatter detection performance is proposed by implementing a radar system that transmits and receives successive N sensing signal blocks using a conventional radar system that transmits and receives sensing signal blocks periodically based on certain time intervals.

For example, for (or, for each of) at least one among elements/parameters of service type (and/or (LCH or service) priority and/or QOS requirements (e.g., latency, reliability, minimum communication range) and/or PQI parameters) (and/or HARQ feedback enabled (and/or disabled) LCH/MAC PDU (transmission) and/or CBR measurement value of a resource pool and/or SL cast type (e.g., unicast, groupcast, broadcast) and/or SL groupcast HARQ feedback option (e.g., NACK only feedback, ACK/NACK feedback, NACK only feedback based on TX-RX distance) and/or SL mode 1 CG type (e.g., SL CG type 1/2) and/or SL mode type (e.g., mode 1/2) and/or resource pool and/or PSFCH resource configured resource pool and/or source (L2) ID (and/or destination (L2) ID) and/or PC5 RRC connection/link and/or SL link and/or (with base station) connection state (e.g., RRC connected state, IDLE state, inactive state) and/or whether an SL HARQ process (ID) and/or (of a transmitting UE or a receiving UE) performs an SL DRX operation and/or whether it is a power saving (transmitting or receiving) UE and/or (from the perspective of a specific UE) case when PSFCH transmission and PSFCH reception (and/or a plurality of PSFCH transmissions (exceeding UE capability)) overlap (and/or a case where PSFCH transmission (and/or PSFCH reception) is omitted) and/or a case where a receiving UE actually (successfully) receives an inter-UE physical control channel (e.g., PSCCH) (and/or inter-UE physical shared channel (e.g., PSSCH)) (re) transmission from a transmitting UE, etc.), whether the rule is applied (and/or the proposed method/rule-related parameter value of the present disclosure) may be specifically (or differently or independently) configured/allowed. In addition, in the present disclosure, "configuration" (or "designation") wording may be extended and interpreted as a form in which a base station informs a UE through a predefined (physical layer or higher layer) channel/signal (e.g., SIB, RRC, MAC CE) (and/or a form provided through pre-configuration and/or a form in which a UE informs other UEs through a predefined (physical layer or higher layer) channel/signal (e.g., SL MAC CE, PC5 RRC)), etc. In addition, in this disclosure, the "PSFCH" wording may be extended and interpreted as "(NR or LTE) inter-UE physical shared channel (e.g., PSSCH) (and/or (NR or LTE) inter-UE physical control channel (e.g., PSCCH)) (and/or (NR or LTE) SL SSB (and/or UL channel/signal))". And, the methods proposed in the present disclosure may be used in combination with each other (in a new type of manner).

For example, the term "specific threshold" below may refer to a threshold value defined in advance or (pre-) configured by a higher layer (including an application layer) of a network, a base station, or a UE. Hereinafter, the term "specific configuration value" may refer to a value defined in advance or (pre-)configured by a higher layer (including an application layer) of a network, a base station, or a UE. Hereinafter, "configured by a network/base station" may mean an operation in which a base station configures (in advance) a UE by higher layer RRC signaling, configures/signals a UE through MAC CE, or signals a UE through DCI.

In the following disclosure, the following terms are used.

LMF - location management function

UE-triggered inter-UE positioning (e.g., sidelink (SL) positioning) - inter-UE positioning (e.g., SL positioning) where the procedure is triggered by UE

gNB/LMF-triggered inter-UE positioning (e.g., SL positioning) - inter-UE positioning (e.g., SL positioning) where the procedure is triggered by gNB/LMF

UE-controlled inter-UE positioning (e.g., SL positioning) - inter-UE positioning (e.g., SL positioning) where the inter-UE positioning (e.g., SL positioning) group is created by UE

gNB-controlled inter-UE positioning (e.g., SL positioning) - inter-UE positioning (e.g., SL positioning) where the inter-UE positioning (e.g., SL positioning) group is created by gNB

UE-based inter-UE positioning (e.g., SL positioning) - inter-UE positioning (e.g., SL positioning) where the UE position is calculated by UE

UE-assisted inter-UE positioning (e.g., SL positioning) - inter-UE positioning (e.g., SL positioning) where the UE position is calculated by gNB/LMF

inter-UE positioning (e.g., SL positioning) group - UEs that participates in inter-UE positioning (e.g., SL positioning)

Target UE (T-UE) - UE whose position is calculated

Server UE (S-UE) - UE that assists T-UE's positioning

Anchor UE - UE that assists T-UE's positioning

MG - measurement gap where only a reference signal (e.g., SL PRS) transmission is allowed

MW - measurement window where both SL data and reference signal (e.g., SL PRS) can be transmitted in a multiplexed way

SL PRS - sidelink positioning reference signal

CCH - control channel

IUC message - inter-UE coordination message. It is a message that a transmitting UE receives from another UE, including a receiving UE, and it may mean a message that includes information for a preferred resource set that is suitable for a transmitting UE to transmit to a receiving UE and/or a non-preferred resource set that is not suitable for the transmitting UE to transmit.

JCAS - Joint Communication and Sensing

RIS - Reconfigurable Intelligent Surface

According to an embodiment of the present disclosure, an inter-UE reference signal (e.g., SL PRS) transmission resource may be composed of an inter-UE reference signal (e.g., SL PRS) resource set composed of the following information. Or, for example, information related to inter-UE reference signal (e.g., SL PRS) transmission resources may include some or all of the following information.

1. inter-UE reference signal (e.g., SL PRS) resource set ID
2. inter-UE reference signal (e.g., SL PRS) resource ID list: an inter-UE reference signal (e.g., SL PRS) resource ID list in an inter-UE reference signal (e.g., SL PRS) resource set
3. inter-UE reference signal (e.g., SL PRS) resource type: it can be configured as periodic, aperiodic, semi-persistent, or on-demand.
4. Alpha value for inter-UE reference signal (e.g., SL PRS) power control
5. P0 value for inter-UE reference signal (e.g., SL PRS) power control
6. Pathloss reference for inter-UE reference signal (e.g., SL PRS) power control: it can be configured as SL synchronization signal block (SSB), downlink (DL) PRS, uplink (UL) sounding reference signal (SRS), SL SRS for positioning, inter-UE physical control channel demodulation reference signal (e.g., PSCCH DMRS), inter-UE physical shared channel demodulation reference signal (e.g., PSSCH DMRS), PSFCH, or SL CSI RS etc.

According to an embodiment of the present disclosure, an inter-UE reference signal (e.g., SL PRS) resource set may be composed of an inter-UE reference signal (e.g., SL PRS) resource composed of the following information. Or, for example, information related to the inter-UE reference signal (e.g., SL PRS) transmission resource may include some or all of the following information.

1. inter-UE reference signal (e.g., SL PRS) resource ID
2. inter-UE reference signal (e.g., SL PRS) comb size: an interval between REs at which an inter-UE reference signal (e.g., SL PRS) is transmitted within a symbol.
3. inter-UE reference signal (e.g., SL PRS) comb offset: an index of a RE at which an inter-UE reference signal (e.g., SL PRS) is initially transmitted within the first inter-UE reference signal (e.g., SL PRS) symbol.
4. inter-UE reference signal (e.g., SL PRS) comb cyclic shift: cyclic shift used to generate the sequence constituting the inter-UE reference signal (e.g., SL PRS).
5. inter-UE reference signal (e.g., SL PRS) start position: an index of the first symbol in which inter-UE reference signal (e.g., SL PRS) is transmitted within one slot.
6. inter-UE reference signal (e.g., SL PRS) #symbol: the number of symbols constituting inter-UE reference signal (e.g., SL PRS) within one slot
7. Frequency domain shift: position (of an index) of the lowest frequency at which inter-UE reference signal (e.g., SL PRS) is transmitted in the frequency domain
8. inter-UE reference signal (e.g., SL PRS) BW: Frequency Bandwidth Used for inter-UE reference signal (e.g., SL PRS) Transmission
9. inter-UE reference signal (e.g., SL PRS) resource type: it can be configured as periodic, aperiodic, semi-persistent, or on-demand.
10. inter-UE reference signal (e.g., SL PRS) periodicity: it is a period in the time domain between inter-UE reference signal (e.g., SL PRS) resources, and has a physical or logical slot unit of a resource pool in which the inter-UE reference signal (e.g., SL PRS) is transmitted.
11. inter-UE reference signal (e.g., SL PRS) offset: Reference timing Reference, an offset in the time domain to the start of the first inter-UE reference signal (e.g., SL PRS) resource, and it has units of physical or logical slots of resource pools in which inter-UE reference signals (e.g., SL PRSs) are transmitted. For example, the reference timing may be SFN = 0, DFN = 0, or a successful reception or decoding time of RRC/MAC CE/DCI/SCI related to the inter-UE reference signal (e.g., SL PRS) resource.
12. inter-UE reference signal (e.g., SL PRS) sequence ID
13. inter-UE reference signal (e.g., SL PRS) spatial relation: It can be configured to SL SSB, DL PRS, UL SRS, UL SRS for positioning, inter-UE physical control channel demodulation reference signal (e.g., PSCCH DMRS), inter-UE physical shared channel demodulation reference signal (e.g., PSSCH DMRS), PSFCH, or SL CSI RS.
14. inter-UE reference signal (e.g., SL PRS) CCH: inter-UE reference signal (e.g., SL PRS) control channel. For example, inter-UE reference signal (e.g., SL PRS) resource configuration information and resource location may be signaled through the inter-UE reference signal (e.g., SL PRS) CCH.

Referring to Equation 7, when the radar receives a signal reflected by an object from a signal transmitted by the radar, a power magnitude of a received signal may have a characteristic of being attenuated in proportion to a fourth power of a distance to an object to be detected.

[Equation 7]

$$P_r = \frac{P_t G_t \sigma A_{er}}{(4\pi R^2)^2} = \frac{P_t G_t G_r \sigma \lambda^2}{(4\pi)^3 R^4}$$

Here, for example, $P_t$ may represent transmit power (W), $P_r$ may represent receive power (W), $G_t$ may represent a transmit antenna gain, $G_r$ may represent a receive antenna gain, $\sigma$ may represent a radar cross section, and $A_{er}$ may represent an effective aperture area of a receive antenna.

For example, a transmit power of a radar/sensing signal for object detection, which is transmitted based on an integrated sensing and communication system (e.g., ISAC), needs to be limited in consideration of interference with a communication signal. Accordingly, unlike a general radar transmission signal, in an integrated sensing and communication system (e.g., ISAC), transmitting a radar/sensing signal for object detection with a large transmit power to sense a distant object may be inappropriate. In addition, since only a portion of a signal incident on an object is reflected and received, a received signal power may be further attenuated, which may result in a problem in which reception performance is degraded.

In the case of a bistatic radar technique for sensing an object by allowing a reception radar separate from the transmission radar to receive a signal reflected by an object from a signal transmitted by the transmission radar in order to address the above-described problems, a power of a signal received by the reception radar may have a characteristic of being attenuated in proportion to an n-th power of a product of a distance between the transmission radar and the object and a distance between the reception radar and the object (for example, n = 2 in free space). Accordingly, when a distance between the reception radar and the object is relatively short, an advantage of improved detection performance for the object may be obtained.

[Equation 8]

$$P_r = \frac{P_{TX} \cdot G_{TX} \cdot G_{RX} \cdot \lambda^2}{(4\pi)^3 \cdot R_{TX}^2 \cdot R_{RX}^2} \cdot RCS$$

Here, for example, $P_{TX}$ may represent transmission signal power, $P_{RX}$ may represent reception signal power, $R_{TX}$ may represent a distance between a transmitter and a target, $R_{RX}$ may represent a distance between a receiver and the target, $G_{TX}$ may represent a transmit antenna gain, $G_{RX}$ may represent a receive antenna gain, $\lambda$ may represent a wavelength, and RCS may represent a radar cross section.

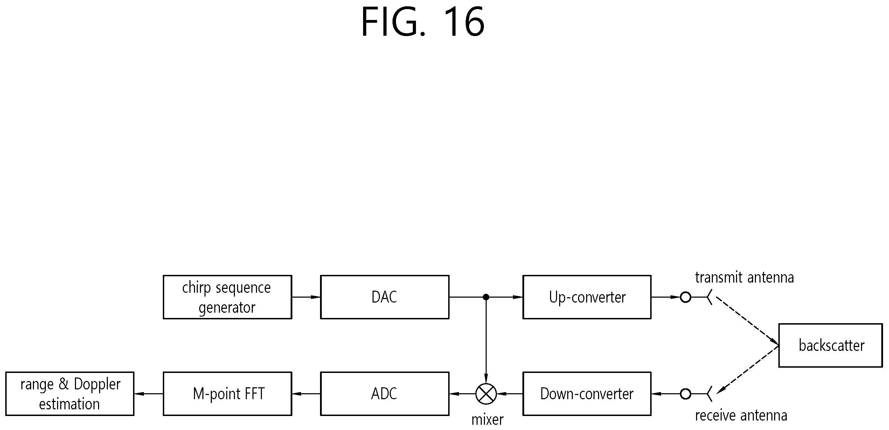

FIG. 16 shows a system that transmits sensing signal blocks at certain time intervals and constructs backscatter from reflected signals, according to an embodiment of the present disclosure. The embodiment of FIG. 16 may be combined with various embodiments of the present disclosure.

Referring to FIG. 16, a radar system operating in units of M-sample-length chirp signal blocks is shown. For example, periodic M-sample-length chirp signal blocks having certain time intervals, which are generated by a chirp sequence generator, may be converted into analog signals through a DAC, and may then be modulated to an RF frequency and amplified through an up-converter, and finally transmitted through a transmit antenna.

Thereafter, for example, the transmitted chirp signal block may be reflected by backscatter and received through a receive antenna (RX antenna), and the received signal may pass through a down-converter and be demodulated into a baseband signal, and may then be multiplied with a transmitted chirp sequence by a mixer. Thereafter, a signal passing through the mixer may be converted into a digital signal through an ADC and may undergo an M-point FFT corresponding to a chirp signal block length, and at this time, signal energy may be detected at a frequency location proportional to a distance to the backscatter, such that a distance to the backscatter and a (relative) velocity may be finally estimated by a range & Doppler estimation block.

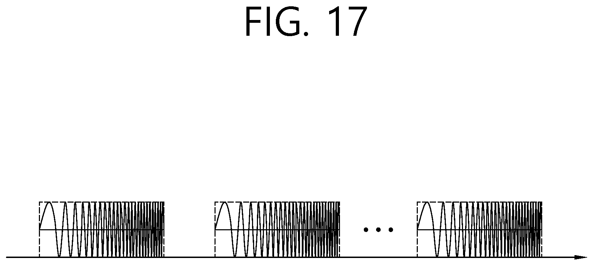

FIG. 17 shows a signal waveform output through a DAC block of a radar system, according to an embodiment of the present disclosure. The embodiment of FIG. 17 may be combined with various embodiments of the present disclosure.

Referring to FIG. 17, a chirp signal block waveform that is periodically transmitted with a time interval is shown. For example, the chirp signal may be periodically transmitted. For example, the chirp signal may be transmitted in a non-successive manner. For example, the chirp signal may be transmitted in a time interval that periodically and repeatedly includes an on time interval and an off time interval. For example, in the on time interval, an amplitude of the chirp signal may be constant. For example, in the on time interval, a frequency of the chirp signal may be modulated. For example, the modulated frequency may be modulated in a form of a linear function (e.g., f = k * t).

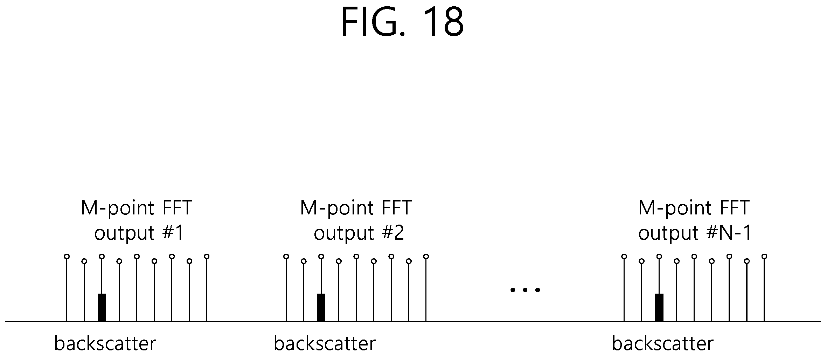

FIG. 18 shows a waveform of periodic M-point FFT output signals of a radar system, according to an embodiment of the present disclosure. The embodiment of FIG. 18 may be combined with various embodiments of the present disclosure.

Referring to FIG. 18, an M-point FFT output signal waveform that is periodically output with a time interval is shown. For example, in FIG. 18, each signal block represents an M-point FFT output signal, a signal indicated by a thick line within each signal block represents a reflected signal waveform generated by backscatter, and signals indicated by thin lines at remaining frequency locations represent reflected signal waveforms generated by clutter. Referring to FIG. 18, it can be seen that a signal magnitude due to backscatter is smaller than a signal magnitude due to clutter, and it can be seen that detection performance of the radar system is degraded due to signals caused by the clutter.

According to an embodiment of the present disclosure, an operation method of a radar system for transmitting the above-described N successive chirp signal blocks using the above-described radar system hardware based on periodic chirp signal block transmission may be provided.

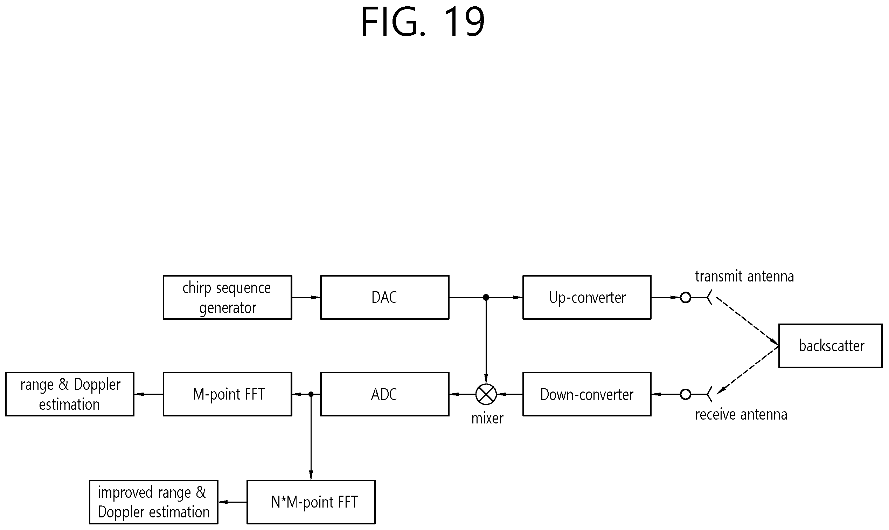

FIG. 19 shows an N-successive chirp signal-based radar system using a periodic chirp signal-based radar system, according to an embodiment of the present disclosure. FIG. 19 may be combined with various embodiments of the present disclosure.

Referring to FIG. 19, by inputting ADC output signal values in FIG. 16 into an N×M-point FFT block capable of processing a total of N successive chirp signal blocks, a radar system having improved object detection performance may be implemented based on signals reflected and received from transmitted N successive chirp signal blocks.

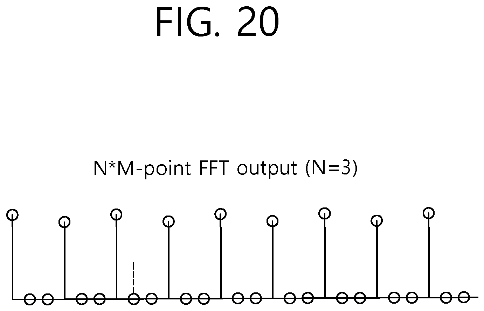

FIG. 20 shows a detection signal waveform of an N-successive chirp signal-based radar system, according to an embodiment of the present disclosure. The embodiment of FIG. 20 may be combined with various embodiments of the present disclosure.

Referring to FIG. 20, a waveform of an N*M-point FFT output signal in a case where N is 3 is shown. Compared to an input signal before N*M-point FFT signal processing, the output signal may have frequency location resolution improved by a factor of 3. Through the N*M-point FFT signal processing, a waveform of a signal reflected by backscatter, which is indicated by a dotted line in FIG. 20, may be separated from a waveform reflected by clutter, which is indicated by a solid line, thereby resolving an interference problem caused by signals reflected by the clutter.

According to an embodiment of the present disclosure, another method of implementing the N successive M-sample chirp-based radar system may be provided by using radar system hardware based on periodic chirp signal block transmission.

For example, when an ADC output signal cannot be obtained in the system of FIG. 16, an M-point FFT output may be used instead. For example, M-point FFT output signal values may be converted into a time-domain ADC output signal waveform through an M-point IFFT block, and then the converted signal may be input to the N*M-point FFT block of FIG. 19, thereby implementing an N successive M-sample chirp signal-based radar system as shown in FIG. 19.

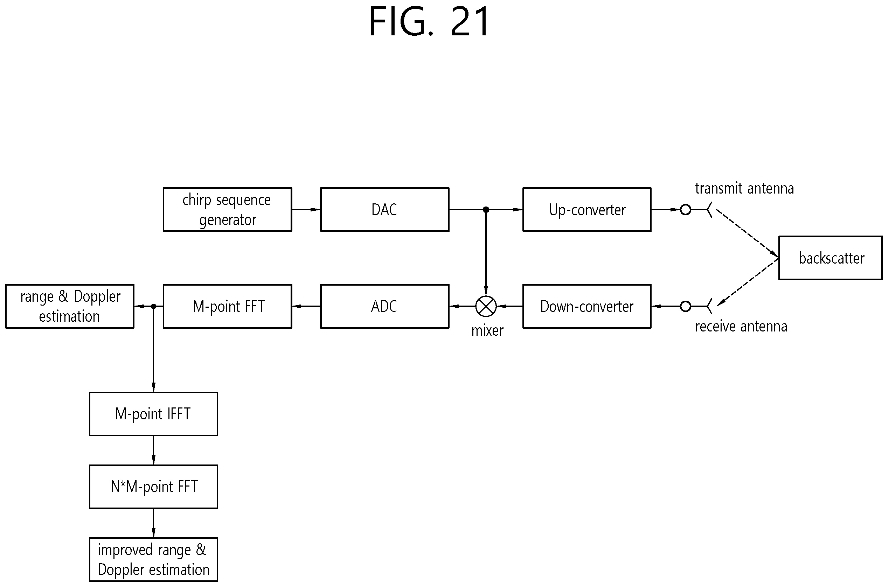

FIG. 21 shows an N successive M-sample chirp signal-based radar system implemented using an M-point FFT output, according to an embodiment of the present disclosure. The embodiment of FIG. 21 may be combined with various embodiments of the present disclosure.

Referring to FIG. 21, an N-successive chirp signal-based radar system implemented using a periodic chirp signal-based radar system is shown. In FIG. 21, an M-point IFFT output signal is identical to an ADC output signal of FIG. 19, and thus radar detection performance based on an N*M-point FFT output may also be identical to that shown in FIG. 20.

For example, as illustrated in FIG. 19 or FIG. 21, when sensing is performed based on an N*M-point FFT output by reconstructing only an M-sample chirp signal in a time domain, detection and estimation performance may be degraded compared to an operation of performing sensing by transmitting N successive M-sample chirp signals from the beginning.

The reason for this may be that, when a single M-sample chirp signal passes through a channel, a channel delay may occur according to a delay profile of the channel, and in conventional hardware using the periodic M-sample chirp signal, sensing is performed using only an M-point FFT, such that delayed channel values occurring after the M-sample chirp signal may be lost due to the channel delay.

On the other hand, in a radar system that transmits N successive M-sample chirp signals from the beginning, information due to channel delay for each M-sample chirp signal is included in the N successive M-sample chirp signals, and thus the performance degradation as described above may not occur.

According to an embodiment of the present disclosure, in order to address the above-described problem, after overlapping data after each M-sample chirp signal with an M-sample chirp signal received immediately next in time, a total of N M-sample chirp signals generated as described above may undergo an N*M-point FFT, thereby enabling sensing to be performed without performance degradation compared to a radar system that performs sensing based on N successive M-sample chirp signals transmitted from the beginning.

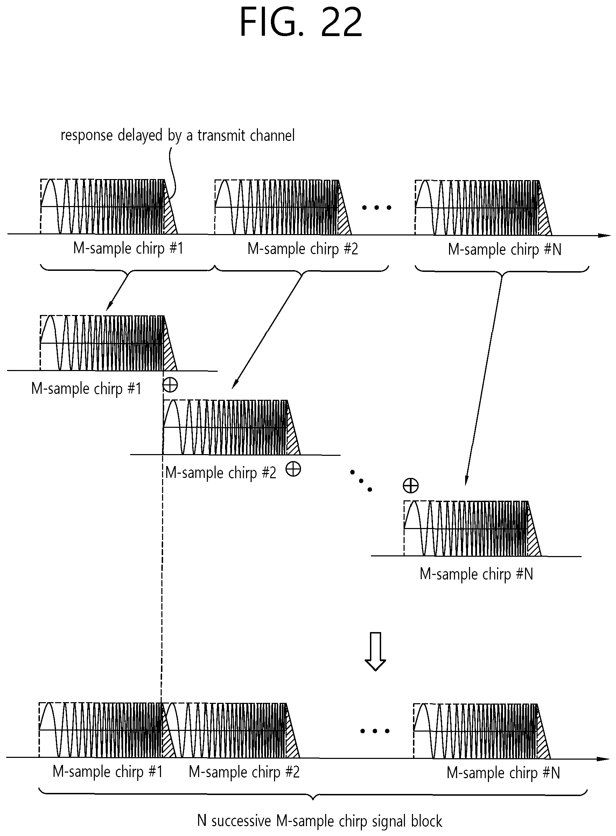

FIG. 22 shows a method for addressing a performance degradation problem compared to a radar system that actually transmits N successive M-sample chirp signals, according to an embodiment of the present disclosure. The embodiment of FIG. 22 may be combined with various embodiments of the present disclosure.

Referring to FIG. 22, a method of reconfiguring N successive M-sample chirp signal blocks from N non-successive M-sample chirp signal blocks received is shown. After combining the N non-successive M-sample chirp signals such that the signals temporally overlap, range & Doppler estimation may be performed based on the corresponding signals, thereby enabling a radar operation in which channel delay information is taken into account.

The examples of the present disclosure are not limited to a chirp signal block-based radar system, and may also be applied to a radar system based on radar and sensing signals having similar characteristics instead of the chirp signal blocks.

According to various embodiments of the present disclosure, a method of improving backscatter detection performance has been proposed by implementing a radar system operation of transmitting and receiving successive N sensing signal blocks based on signal values received or signal-processed by a radar system that periodically transmits and receives sensing signal blocks based on certain time intervals.

A radar device may perform an operation of transmitting a periodic chirp signal and detecting a target object based on the signal. Here, in such a conventional radar system based on periodic chirp signal transmission, there is a problem in that target object detection performance may be degraded due to interference originating from surrounding clutter. Here, the chirp signal is a periodically transmitted signal and may have a non-successive waveform.

According to an embodiment of the present disclosure, a device may group a specific number (M) of chirp signals having periodic and non-successive waveforms and perform signal processing, such that signal processing for the chirp signals may operate as if it were performed successively.

According to an embodiment of the present disclosure, sensing based on successive N chirp signals may be performed using periodic N chirp signals. For example, N*M point FFT signal processing may be performed on ADC outputs for the N received chirp signals. For example, after each of the N FFT output signals is IFFT-processed, N*M point FFT signal processing may be performed. For example, a device may perform N*M point FTT signal processing after overlapping each of the N chirp signals in a time domain by a channel delay spread.

According to various embodiments of the present disclosure, by implementing a radar system based on successive chirp signal transmission using periodic chirp signals (radar signals) according to a conventional technique, an effect of resolving a problem in which target object detection performance is degraded due to interference originating from surrounding clutter may be achieved.

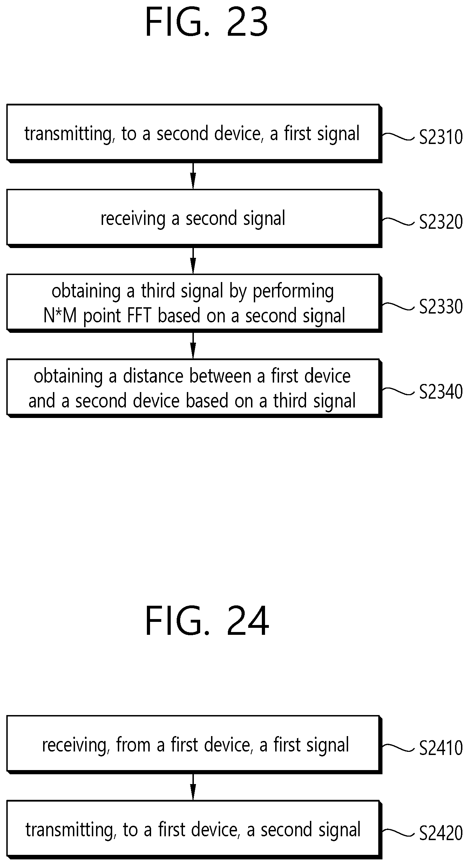

FIG. 23 shows a procedure in which a first device performs wireless communication, according to an embodiment of the present disclosure. The embodiment of FIG. 23 may be combined with various embodiments of the present disclosure.

Referring to FIG. 23, in step S2310, a first device may transmit, to a second device, a first signal. In step S2320, the first device may receive a second signal. In step S2330, the first device may obtain a third signal by performing N*M point fast Fourier transform, FFT, based on the second signal. In step S2340, the first device may obtain a distance between the first device and the second device based on the third signal.

For example, the first device may be a radar device.

For example, the first device may be a signal obtained by up-converting a fourth signal that is obtained by analog converting a chirp signal.

For example, the first signal may be periodically transmitted.

For example, the third signal may be obtained by: obtaining a fourth signal by down-converting the second signal; obtaining a sixth signal by multiplying a fifth signal, that is obtained by analog converting a chirp signal, and the fourth signal; obtaining a seventh signal by digital converting the sixth signal; and performing the N*M point FFT on the seventh signal.

For example, the third signal may be obtained by: obtaining a fourth signal by down-converting the second signal; obtaining a sixth signal by multiplying a fifth signal, that is obtained by analog converting a chirp signal, and the fourth signal; obtaining a seventh signal by digital converting the sixth signal; obtaining an eighth signal by performing M point FFT on the seventh signal; obtaining a ninth signal by performing M point inverse fast Fourier transform, IFFT, on the eighth signal; and performing the N*M point FFT on the ninth signal.

For example, wherein non-successive N M-sample signals may be reconfigured into a successive M-sample signal, in the N*M point FFT.

For example, the successive M-sample signal may be reconfigured so that responses of each of the non-successive N M-sample signals overlap.

For example, the second device may be a backscatter device.

For example, the second signal may include a signal component reflected from the second device and a signal component reflected from a clutter.

For example, additionally, the first device may estimate a velocity of the second device based on the third signal.

For example, a distance between the first device and the second device or the velocity of the second device may be estimated by a Doppler estimation block.

For example, the first signal may be a reference signal related to sensing.

The above-described embodiment may be applied to various devices described below. First, a processor 102 of a first device 100 may control a transceiver 106 to transmit, to a second device 200, a first signal. And, the processor 102 of the first device 100 may control the transceiver 106 to receive a second signal. And, the processor 102 of the first device 100 may obtain a third signal by performing N*M point fast Fourier transform, FFT, based on the second signal. And, the processor 102 of the first device 100 may obtain a distance between the first device 100 and the second device 200 based on the third signal.

According to an embodiment of the present disclosure, a first device for performing wireless communication may be proposed. For example, the first device may comprise: at least one transceiver; at least one processor; and at least one memory operably connected to the at least one processor and storing instructions that, based on being executed by the at least one processor, cause the first device to perform operations. For example, the operations may comprise: transmitting, to a second device, a first signal; receiving a second signal; obtaining a third signal by performing N*M point fast Fourier transform, FFT, based on the second signal; and obtaining a distance between the first device and the second device based on the third signal.

For example, the first device may be a radar device.

For example, the first device may be a signal obtained by up-converting a fourth signal that is obtained by analog converting a chirp signal.

For example, the first signal may be periodically transmitted.

For example, the third signal may be obtained by: obtaining a fourth signal by down-converting the second signal; obtaining a sixth signal by multiplying a fifth signal, that is obtained by analog converting a chirp signal, and the fourth signal; obtaining a seventh signal by digital converting the sixth signal; and performing the N*M point FFT on the seventh signal.

For example, the third signal may be obtained by: obtaining a fourth signal by down-converting the second signal; obtaining a sixth signal by multiplying a fifth signal, that is obtained by analog converting a chirp signal, and the fourth signal; obtaining a seventh signal by digital converting the sixth signal; obtaining an eighth signal by performing M point FFT on the seventh signal; obtaining a ninth signal by performing M point inverse fast Fourier transform, IFFT, on the eighth signal; and performing the N*M point FFT on the ninth signal.

For example, wherein non-successive N M-sample signals may be reconfigured into a successive M-sample signal, in the N*M point FFT.

For example, the successive M-sample signal may be reconfigured so that responses of each of the non-successive N M-sample signals overlap.

For example, the second device may be a backscatter device.

For example, the second signal may include a signal component reflected from the second device and a signal component reflected from a clutter.

For example, additionally, the operations may further comprise: estimating a velocity of the second device based on the third signal.

For example, a distance between the first device and the second device or the velocity of the second device may be estimated by a Doppler estimation block.

For example, the first signal may be a reference signal related to sensing.

According to an embodiment of the present disclosure, a device adapted to control a first user equipment, UE, may be proposed. For example, the device may comprise: at least one processor; and at least one memory operably connected to the at least one processor and storing instructions that, based on being executed by the at least one processor, cause the first UE to perform operations. For example, the operations may comprise: transmitting, to a second UE, a first signal; receiving a second signal; obtaining a third signal by performing N*M point fast Fourier transform, FFT, based on the second signal; and obtaining a distance between the first UE and the second UE based on the third signal.

According to an embodiment of the present disclosure, a non-transitory computer-readable storage medium storing instructions may be proposed. For example, the instructions, based on being executed, may cause a first device to: transmit, to a second device, a first signal; receive a second signal; obtain a third signal by performing N*M point fast Fourier transform, FFT, based on the second signal; and obtain a distance between the first device and the second device based on the third signal.

FIG. 24 shows a procedure in which a second device performs wireless communication, according to an embodiment of the present disclosure. The embodiment of FIG. 24 may be combined with various embodiments of the present disclosure.

Referring to FIG. 24, in step S2410, a second device may receive, from a first device, a first signal. In step S2420, the second device may transmit, to the first device, a second signal. For example, the second signal may be a reflected signal of the first signal. For example, a third signal may be obtained to the first device by N*M point fast Fourier transform, FFT, being performed based on the second signal, and a distance between the first device and the second device may be obtained based on the third signal.

For example, the first signal may be a signal obtained by up-converting a fourth signal that is obtained by analog converting a chirp signal.

The above-described embodiment may be applied to various devices described below. First, a processor 202 of a second device 200 may control a transceiver 206 to receive, from a first device 100, a first signal. And, the processor 202 of the second device 200 may control the transceiver 206 to transmit, to the first device 100, a second signal. For example, the second signal may be a reflected signal of the first signal. For example, a third signal may be obtained to the first device 100 by N*M point fast Fourier transform, FFT, being performed based on the second signal, and a distance between the first device 100 and the second device 200 may be obtained based on the third signal.

According to an embodiment of the present disclosure, a second device for performing wireless communication may be proposed. For example, the second device may comprise: at least one transceiver; at least one processor; and at least one memory operably connected to the at least one processor and storing instructions that, based on being executed by the at least one processor, cause the second device to perform operations. For example, the operations may comprise: receiving, from a first device, a first signal; and transmitting, to the first device, a second signal, wherein the second signal may be a reflected signal of the first signal, wherein a third signal may be obtained to the first device by N*M point fast Fourier transform, FFT, being performed based on the second signal, and wherein a distance between the first device and the second device may be obtained based on the third signal.

For example, the first signal may be a signal obtained by up-converting a fourth signal that is obtained by analog converting a chirp signal.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/-description, the same reference symbols may denote the same or corresponding hardware blocks, software blocks, or functional blocks unless described otherwise.

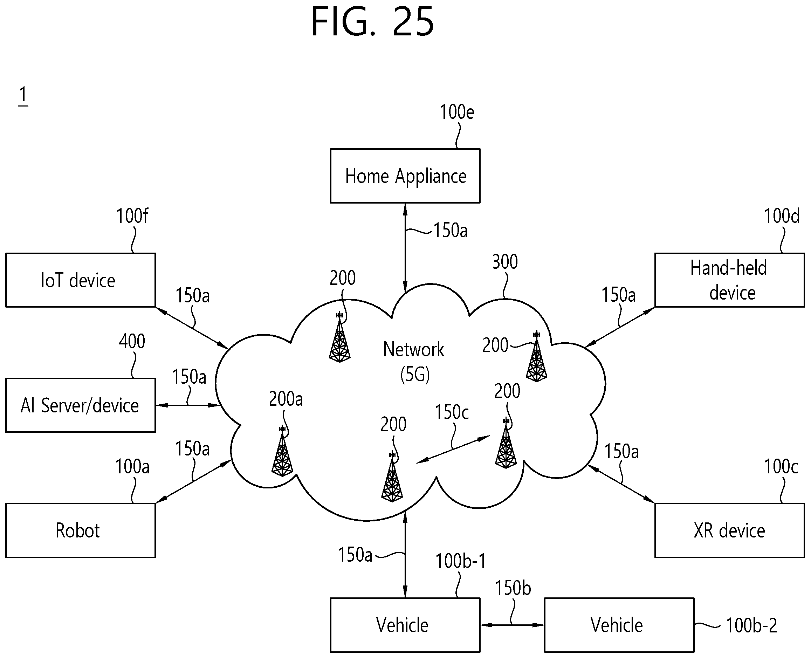

FIG. 25 shows a communication system 1, based on an embodiment of the present disclosure. The embodiment of FIG. 25 may be combined with various embodiments of the present disclosure.

Referring to FIG. 25, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

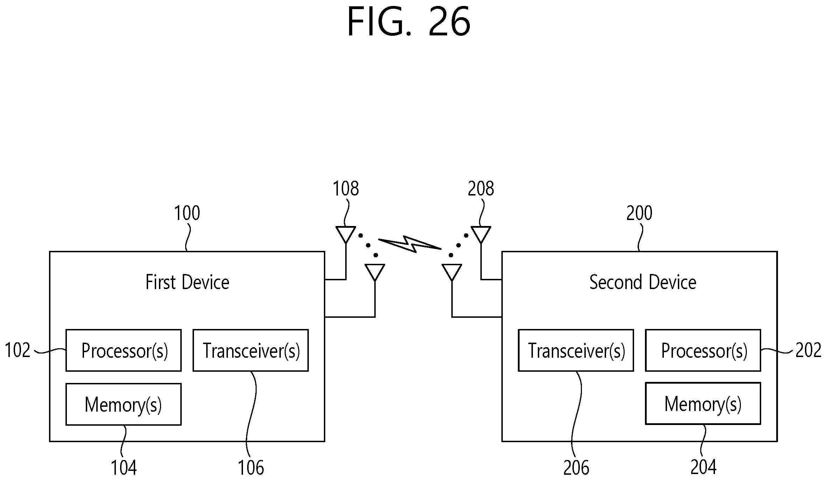

FIG. 26 shows wireless devices, based on an embodiment of the present disclosure. The embodiment of FIG. 26 may be combined with various embodiments of the present disclosure.

Referring to FIG. 26, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 25.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used

EP 4 752 589 A1

with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

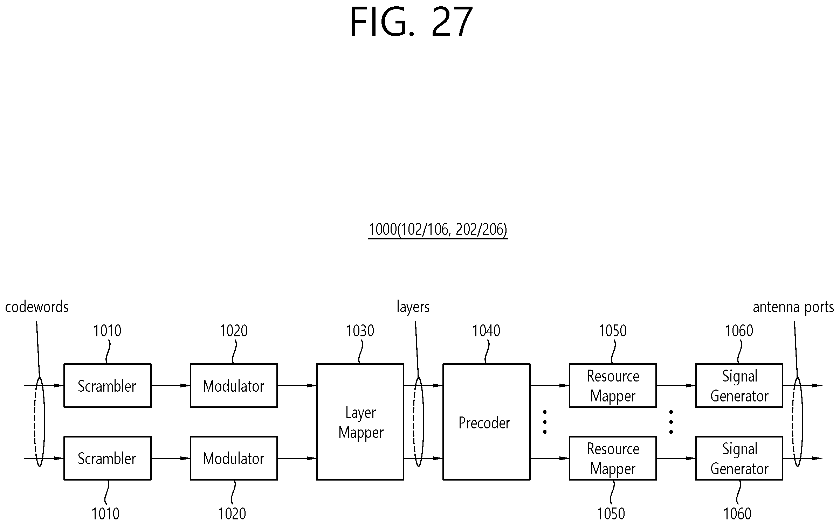

FIG. 27 shows a signal process circuit for a transmission signal, based on an embodiment of the present disclosure. The embodiment of FIG. 27 may be combined with various embodiments of the present disclosure.

Referring to FIG. 27, a signal processing circuit 1000 may include scramblers 1010, modulators 1020, a layer

25

mapper 1030, a precoder 1040, resource mappers 1050, and signal generators 1060. An operation/function of FIG. 27 may be performed, without being limited to, the processors 102 and 202 and/or the transceivers 106 and 206 of FIG. 26. Hardware elements of FIG. 27 may be implemented by the processors 102 and 202 and/or the transceivers 106 and 206 of FIG. 26. For example, blocks 1010 to 1060 may be implemented by the processors 102 and 202 of FIG. 26. Alternatively, the blocks 1010 to 1050 may be implemented by the processors 102 and 202 of FIG. 26 and the block 1060 may be implemented by the transceivers 106 and 206 of FIG. 26.

Codewords may be converted into radio signals via the signal processing circuit 1000 of FIG. 27. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 27. For example, the wireless devices (e.g., 100 and 200 of FIG. 26) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

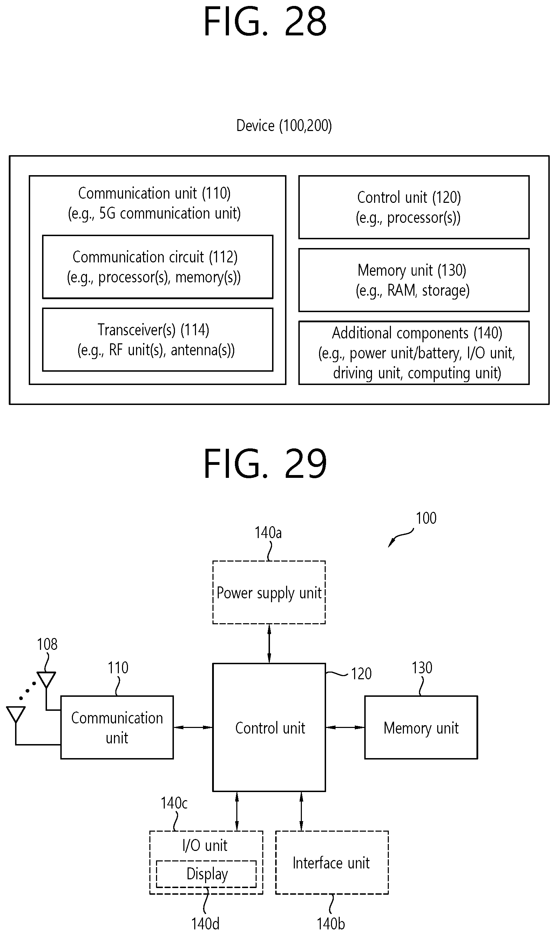

FIG. 28 shows another example of a wireless device, based on an embodiment of the present disclosure. The wireless device may be implemented in various forms according to a use-case/service (refer to FIG. 25). The embodiment of FIG. 28 may be combined with various embodiments of the present disclosure.

Referring to FIG. 28, wireless devices 100 and 200 may correspond to the wireless devices 100 and 200 of FIG. 26 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 26. For example, the transceiver(s) 114 may include the one or more transceivers 106 and 206 and/or the one or more antennas 108 and 208 of FIG. 26. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 25), the vehicles (100b-1 and 100b-2 of FIG. 25), the XR device (100c of FIG. 25), the hand-held device (100d of FIG. 25), the home appliance (100e of FIG. 25), the IoT device (100f of FIG. 25), a digital broadcast terminal, a hologram device, a public safety device, an MTC device, a medicine device, a fintech device (or a finance device), a security device, a climate/environment device, the AI server/device (400 of FIG. 25), the BSs (200 of FIG. 25), a network node, etc. The wireless device may be used in a mobile or fixed place according to a use-example/service.

In FIG. 28, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 28 will be described in detail with reference to the drawings.

FIG. 29 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 29 may be combined with various embodiments of the present disclosure.

Referring to FIG. 29, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 28, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/-signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

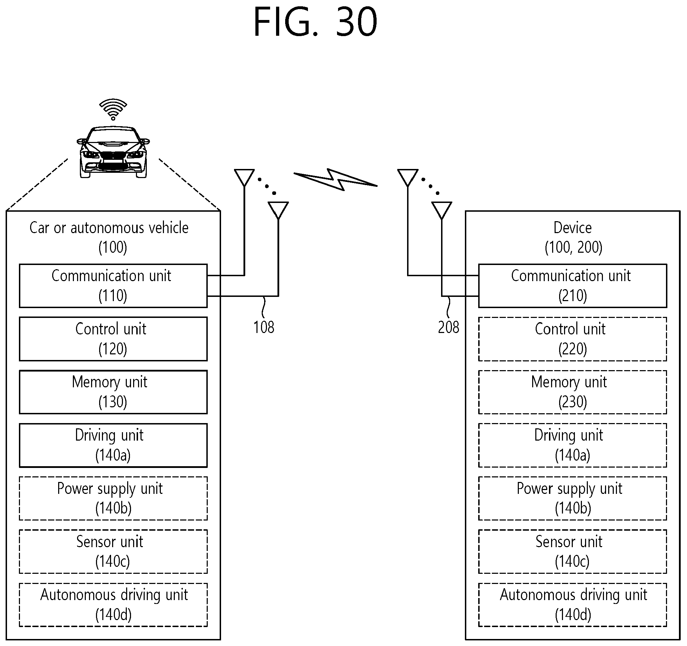

FIG. 30 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 30 may be combined with various embodiments of the present disclosure.

Referring to FIG. 30, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 28, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

### Claims

1. A method for performing, by a first device, wireless communication, the method comprising:

   transmitting, to a second device, a first signal;
   receiving a second signal;
   obtaining a third signal by performing N*M point fast Fourier transform, FFT, based on the second signal; and
   obtaining a distance between the first device and the second device based on the third signal.

2. The method of claim 1, wherein the first device is a radar device.

3. The method of claim 1, wherein the first device is a signal obtained by up-converting a fourth signal that is obtained by analog converting a chirp signal.

4. The method of claim 1, wherein the first signal is periodically transmitted.

5. The method of claim 1, wherein the third signal is obtained by:

   obtaining a fourth signal by down-converting the second signal;
   obtaining a sixth signal by multiplying a fifth signal, that is obtained by analog converting a chirp signal, and the fourth signal;
   obtaining a seventh signal by digital converting the sixth signal; and
   performing the N*M point FFT on the seventh signal.

6. The method of claim 1, wherein the third signal is obtained by:

   obtaining a fourth signal by down-converting the second signal;
   obtaining a sixth signal by multiplying a fifth signal, that is obtained by analog converting a chirp signal, and the fourth signal;
   obtaining a seventh signal by digital converting the sixth signal;
   obtaining an eighth signal by performing M point FFT on the seventh signal;
   obtaining a ninth signal by performing M point inverse fast Fourier transform, IFFT, on the eighth signal; and
   performing the N*M point FFT on the ninth signal.

7. The method of claim 1, wherein non-successive N M-sample signals are reconfigured into a successive M-sample signal, in the N*M point FFT.

8. The method of claim 7, wherein the successive M-sample signal is reconfigured so that responses of each of the non-successive N M-sample signals overlap.

9. The method of claim 1, wherein the second device is a backscatter device.

10. The method of claim 1, wherein the second signal includes a signal component reflected from the second device and a signal component reflected from a clutter.

11. The method of claim 1, further comprising:
    estimating a velocity of the second device based on the third signal.

12. The method of claim 11, wherein a distance between the first device and the second device or the velocity of the second device is estimated by a Doppler estimation block.

13. The method of claim 1, wherein the first signal is a reference signal related to sensing.

14. A first device for performing wireless communication, the first device comprising:

    at least one transceiver;
    at least one processor; and
    at least one memory operably connected to the at least one processor and storing instructions that, based on being executed by the at least one processor, cause the first device to perform operations,
    wherein the operations comprise:

    transmitting, to a second device, a first signal;
    receiving a second signal;
    obtaining a third signal by performing N*M point fast Fourier transform, FFT, based on the second signal; and
    obtaining a distance between the first device and the second device based on the third signal.

15. A device adapted to control a first user equipment, UE, the device comprising:

    at least one processor; and
    at least one memory operably connected to the at least one processor and storing instructions that, based on being executed by the at least one processor, cause the first UE to perform operations,
    wherein the operations comprise:

    transmitting, to a second UE, a first signal;
    receiving a second signal;
    obtaining a third signal by performing N*M point fast Fourier transform, FFT, based on the second signal; and
    obtaining a distance between the first UE and the second UE based on the third signal.

16. A non-transitory computer-readable storage medium storing instructions that, based on being executed, cause a first device to:

    transmit, to a second device, a first signal;
    receive a second signal;
    obtain a third signal by performing N*M point fast Fourier transform, FFT, based on the second signal; and
    obtain a distance between the first device and the second device based on the third signal.

17. A method for performing, by a second device, wireless communication, the method comprising:

    receiving, from a first device, a first signal; and
    transmitting, to the first device, a second signal,
    wherein the second signal is a reflected signal of the first signal,
    wherein a third signal is obtained to the first device by N*M point fast Fourier transform, FFT, being performed based on the second signal, and
    wherein a distance between the first device and the second device is obtained based on the third signal.

18. The method of claim 17, wherein the first signal is a signal obtained by up-converting a fourth signal that is obtained by analog converting a chirp signal.

19. A second device for performing wireless communication, the second device comprising:

at least one transceiver;
at least one processor; and
at least one memory operably connected to the at least one processor and storing instructions that, based on being executed by the at least one processor, cause the second device to perform operations,
wherein the operations comprise:

receiving, from a first device, a first signal; and
transmitting, to the first device, a second signal,
wherein the second signal is a reflected signal of the first signal,
wherein a third signal is obtained to the first device by N*M point fast Fourier transform, FFT, being performed based on the second signal, and
wherein a distance between the first device and the second device is obtained based on the third signal.

20. The second device of claim 19, wherein the first signal is a signal obtained by up-converting a fourth signal that is obtained by analog converting a chirp signal.

**FIG. 1**

FIG. 2

# FIG. 3

Satellite
(or UAS platform)

Service
link

Feeder link

Data network

Gateway

Beam foot
print

User
Equipments

Field of view of the satellite
(or UAS platform)

EP 4 752 589 A1

# FIG. 4

Satellite
(or UAS platform)

Satellite
(or UAS platform)

ISL

Feeder link

Service
link

Feeder link
(mandatory if on ISL)

Data network

Gateway

Beam foot
print

User
Equipments

Field of view of the satellite
(or UAS platform)

# FIG. 5

(a)

3GPP system

Object

Object

Sensing Receiver

Sensing Transmitter

Sensing signals

3GPP sensing data

Processing

Sensing results

wireless sensing service

Sensing results

Trusted 3rd party

(b)

3GPP system

Sensing Transmitter

Sensing signals

Object

Object

Sensing Receiver

3GPP sensing data

Processing

Sensing results

wireless sensing service

Sensing results

Trusted 3rd party

EP 4 752 589 A1

FIG. 6

Resource grid

A carrier
(up to 3300 subcarriers,
i.e., 275 RBs)

A BWP

1RB=12 subcarriers

1 RE

1subcarrier

1 symbol

k=0

l=0

# FIG. 7

PRB N3

$N_{BWP, 2}^{size}$

PRB 1

PRB 0

PRB N2

$N_{BWP, 1}^{size}$

PRB 1

PRB 0

PRB N1

$N_{BWP, 0}^{size}$

PRB 1

PRB 0

CRB 0

Carrier Bandwidth

$N_{BWP, 2}^{start}$

$N_{BWP, 1}^{start}$

$N_{BWP, 0}^{start}$

Freq.

Time

PRB 0 (Point A) in reference resource block

# FIG. 8

BS          first UE          second UE          first UE          second UE

resource scheduling    S800

PSCCH    S810          PSCCH    S810

PSSCH    S820          PSSCH    S820

PSFCH    S830          PSFCH    S830

PUCCH/PUSCH    S840

(a)          (b)

# FIG. 9

# FIG. 10

UE | NG-RAN | AMF | LMF | 5GC LCS layer

Location service request — S1010

Location service request — S1015

Location service request — S1020

NG-RAN location procedure — S1030

UE location procedure — S1035

Location service response — S1040

Location service response — S1050

Location service response — S1055

EP 4 752 589 A1

FIG. 11

# FIG. 12

| NG RAN | | AMF | | LMF |
|---|---|---|---|---|
| NRPPa | | | | NRPPa |
| NGAP | | NGAP | HTTP/2 | HTTP/2 |
| SCTP | | SCTP | TLS | TLS |
| | | | TCP | TCP |
| IP | | IP | IP | IP |
| L2 | | L2 | L2 | L2 |
| L1 | | L1 | L1 | L1 |

NG-C      NLs

# FIG. 13

BS A
(Anchor cell)

BS B

BS C

# FIG. 14

# FIG. 15

radar

# FIG. 16

# FIG. 17

# FIG. 18

M-point FFT
output #1

M-point FFT
output #2

M-point FFT
output #N-1

. . .

backscatter

backscatter

backscatter

# FIG. 19

EP 4 752 589 A1

```
chirp sequence          DAC                 Up-converter        ○─<    transmit antenna
generator                                                        ·····
                                                                      ·····
                                                                           backscatter
                                                                      ·····
range & Doppler        M-point FFT          ADC    ⊗   Down-converter  ○─<  ·····
estimation                                        mixer                    receive antenna


improved range &       N*M-point FFT
Doppler estimation
```

# FIG. 20

N*M-point FFT output (N=3)

# FIG. 21

```
chirp sequence          DAC                    Up-converter        transmit antenna
generator
                                                                                    backscatter

range & Doppler       M-point FFT       ADC          Down-converter
estimation                                    mixer            receive antenna

M-point IFFT

N*M-point FFT

improved range &
Doppler estimation
```

# FIG. 22

response delayed by a transmit channel

M-sample chirp #1    M-sample chirp #2    ● ● ●    M-sample chirp #N

M-sample chirp #1    $\oplus$

M-sample chirp #2    $\oplus$

● ● ●    $\oplus$

M-sample chirp #N

M-sample chirp #1    M-sample chirp #2    ● ● ●    M-sample chirp #N

N successive M-sample chirp signal block

# FIG. 23

transmitting, to a second device, a first signal — S2310

receiving a second signal — S2320

obtaining a third signal by performing N*M point FFT based on a second signal — S2330

obtaining a distance between a first device and a second device based on a third signal — S2340

# FIG. 24

receiving, from a first device, a first signal — S2410

transmitting, to a first device, a second signal — S2420

# FIG. 25

1

100e — Home Appliance

100f — IoT device

400 — AI Server/device

100a — Robot

200 / 200a / 200 / 300

Network (5G)

150a / 150c

100d — Hand-held device

100c — XR device

100b-1 — Vehicle

150b

Vehicle — 100b-2

EP 4 752 589 A1

# FIG. 26

# FIG. 27

1000(102/106, 202/206)

codewords

1010 · Scrambler → 1020 · Modulator → 1030 · Layer Mapper → layers → 1040 · Precoder → ⋯ → 1050 · Resource Mapper → ⋯ → 1060 · Signal Generator → antenna ports

1010 · Scrambler → 1020 · Modulator → 1030 · Layer Mapper → 1040 · Precoder → 1050 · Resource Mapper → 1060 · Signal Generator

# FIG. 28

Device (100,200)

# FIG. 29

# FIG. 30

## INTERNATIONAL SEARCH REPORT

| | International application No. |
|---|---|
| | **PCT/KR2024/010571** |

**A.    CLASSIFICATION OF SUBJECT MATTER**

**G01S 7/02**(2006.01)i; **G01S 13/02**(2006.01)i

According to International Patent Classification (IPC) or to both national classification and IPC

**B.    FIELDS SEARCHED**

Minimum documentation searched (classification system followed by classification symbols)

G01S 7/02(2006.01); B60R 21/0134(2006.01); G01S 13/00(2006.01); G01S 13/34(2006.01); G01S 13/44(2006.01);
G01S 13/536(2006.01); G01S 17/32(2006.01); G01S 7/28(2006.01); G01S 7/35(2006.01); G01S 7/491(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 레이더(radar), 거리(distance), N*M 포인트 FFT(N*M point FFT), 연속(succession)

**C.    DOCUMENTS CONSIDERED TO BE RELEVANT**

| Category* | Citation of document, with indication, where appropriate, of the relevant passages | Relevant to claim No. |
|---|---|---|
| A | KR 10-2261047 B1 (INDUSTRY ACADEMY COOPERATION FOUNDATION OF SEJONG UNIVERSITY) 04 June 2021 (2021-06-04)<br>    See paragraphs [0076]-[0078], claim 1 and figure 4. | 1-20 |
| A | KR 10-2019-0122425 A (SEOUL NATIONAL UNIVERSITY R&DB FOUNDATION) 30 October 2019 (2019-10-30)<br>    See claims 1-2 and figures 1-3. | 1-20 |
| A | KR 10-2021-0073262 A (INDUSTRY ACADEMY COOPERATION FOUNDATION OF SEJONG UNIVERSITY) 18 June 2021 (2021-06-18)<br>    See claims 1 and 6 and figures 1-2. | 1-20 |
| A | KR 10-2162365 B1 (DAEGU GYEONGBUK INSTITUTE OF SCIENCE AND TECHNOLOGY) 06 October 2020 (2020-10-06)<br>    See claims 1-2 and figures 1-4. | 1-20 |

[✓] Further documents are listed in the continuation of Box C.          [✓] See patent family annex.

| | |
|---|---|
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **24 October 2024** | **24 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/010571** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0053883 A (DAEGU GYEONGBUK INSTITUTE OF SCIENCE AND TECHNOLOGY) 19 May 2020 (2020-05-19)<br>        See claims 1-4 and figures 1-3. | 1-20 |

## INTERNATIONAL SEARCH REPORT
### Information on patent family members

| International application No. |
| --- |
| **PCT/KR2024/010571** |

| Patent document cited in search report | | | Publication date (day/month/year) | Patent family member(s) | | | Publication date (day/month/year) |
| --- | --- | --- | --- | --- | --- | --- | --- |
| KR | 10-2261047 | B1 | 04 June 2021 | None | | | |
| KR | 10-2019-0122425 | A | 30 October 2019 | None | | | |
| KR | 10-2021-0073262 | A | 18 June 2021 | KR | 10-2355382 | B1 | 25 January 2022 |
| KR | 10-2162365 | B1 | 06 October 2020 | KR | 10-2020-0055259 | A | 21 May 2020 |
| KR | 10-2020-0053883 | A | 19 May 2020 | KR | 10-2165799 | B1 | 13 October 2020 |

Form PCT/ISA/210 (patent family annex) (July 2022)